(19)

Europäisches
Patentamt

European
Patent Office

Office européen
des brevets

(11) **EP 4 462 936 A1**

(12) **EUROPEAN PATENT APPLICATION**
published in accordance with Art. 153(4) EPC

(43) Date of publication:
**13.11.2024 Bulletin 2024/46**

(21) Application number: **22919096.2**

(22) Date of filing: **29.12.2022**

(51) International Patent Classification (IPC):
**H04W 74/08** (2024.01)      **H04W 74/00** (2009.01)
**H04W 72/23** (2023.01)

(52) Cooperative Patent Classification (CPC):
**H04W 72/23; H04W 74/00; H04W 74/08**

(86) International application number:
**PCT/KR2022/021572**

(87) International publication number:
**WO 2023/132559 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.01.2022 KR 20220003001**
**11.02.2022 KR 20220018394**

(71) Applicant: **LG Electronics Inc.**
**Yeongdeungpo-gu**
**Seoul 07336 (KR)**

(72) Inventors:
• **MYUNG, Sechang**
  **Seoul 06772 (KR)**
• **YANG, Suckchel**
  **Seoul 06772 (KR)**
• **KIM, Seonwook**
  **Seoul 06772 (KR)**
• **SHIN, Seokmin**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD FOR TRANSMITTING AND RECEIVING UPLINK SIGNAL AND/OR DOWNLINK SIGNAL, AND DEVICE FOR SAME**

(57)     Disclosed is a method by which a terminal transmits a physical uplink shared channel (PUSCH) in a band equal to or higher than 52.6 GHz in a wireless communication system. Specifically, the method may comprise: receiving a system information block (SIB); receiving a random access response (RAR) uplink (UL) grant for scheduling the PUSCH; and transmitting the PUSCH on the basis of the RAR UL grant, wherein, on the basis that the SIB includes a parameter indicating that a channel access procedure (CAP) should be applied, the number of bits of a field for indicating a channel access type included in the RAR UL grant is 2, and on the basis that the SIB does not include the parameter, the number of bits of a field for indicating the channel access type included in the RAR UL grant is 0.

【FIG. 13】

**Description**

Technical Field

The disclosure relates to a method and apparatus for transmitting and receiving an uplink (UL) signal and/or a downlink (DL) signal, and more particularly, to a method and apparatus for transmitting and receiving a UL signal and/or a DL signal according to whether listen before talk (LBT) should be performed for a signal transmission in a shared spectrum band of 52.6GHz or higher and/or whether channel occupancy time (COT) sharing is allowed.

Background Art

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

Disclosure

Technical Problem

The disclosure is intended to provide a method and apparatus for transmitting and receiving an uplink (UL) signal and/or a downlink (DL) signal.

It will be appreciated by persons skilled in the art that the objects that could be achieved with the disclosure are not limited to what has been particularly described hereinabove and the above and other objects that the disclosure could achieve will be more clearly understood from the following detailed description.

Technical Solution

A method of transmitting a physical uplink shared channel (PUSCH) in a band of 52.6GHz or higher by a user equipment (UE) in a wireless communication system according to an embodiment of the disclosure includes receiving a system information block (SIB), receiving a random access response (RAR) uplink (UL) grant for scheduling the PUSCH, and transmitting the PUSCH based on the RAR UL grant. Based on the SIB including a parameter indicating that a channel access procedure (CAP) is to be applied, the number of bits in a field for indicating a channel access type included in the RAR UL grant is 2, and based on the SIB not including the parameter, the number of bits in the field for indicating a channel access type included in the RAR UL grant is 0.

Based on the SIB not including the parameter, the RAR UL grant may include the same fields as included in an RAR UL grant for a spectrum other than a shared spectrum.

Further, based on the SIB not including the parameter, the RAR UL grant may not include the field for indicating a channel access type.

Further, a sum of the number of bits in the field for indicating a channel access type and the number of bits in a field for frequency resource allocation of the PUSCH, based on the SIB including the parameter may be equal to a sum of the number of bits in the field for indicating a channel access type and the number of bits in the field for frequency resource allocation of the PUSCH, based on the SIB not including the parameter.

Further, regardless of whether the SIB includes the parameter, a sum of the number of bits in the field for indicating a channel access type and the number of bits in a field for frequency resource allocation of the PUSCH may be a fixed value of 14.

Further, based on the SIB including the parameter, the PUSCH may be transmitted after application of a CAP based on the field for indicating a channel access type, and based on the SIB not including the parameter, the PUSCH may be transmitted without a CAP.

A UE for transmitting a PUSCH in a band of 52.6GHz or higher in a wireless communication system according to an embodiment of the disclosure includes at least one transceiver, at least one processor, and at least one memory operably coupled to the at least one processor, and storing instructions which when executed, cause the at least one processor to perform operations. The operations include receiving a SIB through the at least one transceiver, receiving an RAR UL grant for scheduling the PUSCH through the at least one transceiver, and transmitting the PUSCH based on the RAR UL grant through the at least one transceiver. Based on the SIB including a parameter indicating that a CAP is to be applied, the number of bits in a field for indicating a channel access type included in the RAR UL grant is 2, and based on the SIB not including the parameter, the number of bits in the field for indicating a channel access type included in the RAR UL grant is 0.

Based on the SIB not including the parameter, the RAR UL grant may include the same fields as included in an RAR UL grant for a spectrum other than a shared spectrum.

Further, based on the SIB not including the parameter, the RAR UL grant may not include the field for indicating a channel access type.

Further, a sum of the number of bits in the field for indicating a channel access type and the number of bits in a field for frequency resource allocation of the PUSCH, based on the SIB including the parameter may be equal to a sum of the number of bits in the field for indicating a channel access type and the number of bits in the field for frequency resource allocation of the PUSCH, based on the SIB not including the parameter.

Further, regardless of whether the SIB includes the parameter, a sum of the number of bits in the field for indicating a channel access type and the number of bits in a field for frequency resource allocation of the PUSCH may be a fixed value of 14.

Further, based on the SIB including the parameter, the PUSCH may be transmitted after application of a CAP based on the field for indicating a channel access type, and based on the SIB not including the parameter, the PUSCH may be transmitted without a CAP.

A method of receiving a PUSCH in a band of 52.6GHz or higher by a BS in a wireless communication system includes transmitting a SIB, transmitting an RAR UL grant for scheduling the PUSCH, and receiving the PUSCH based on the RAR UL grant. Based on the SIB including a parameter indicating that a CAP is to be applied, the number of bits in a field for indicating a channel access type included in the RAR UL grant is 2, and based on the SIB not including the parameter, the number of bits in the field for indicating a channel access type included in the RAR UL grant is 0.

A BS for receiving a PUSCH in a band of 52.6GHz or higher in a wireless communication system according to an embodiment of the disclosure includes at least one transceiver, at least one processor, and at least one memory operably coupled to the at least one processor, and storing instructions which when executed, cause the at least one processor to perform operations. The operations include transmitting a SIB through the at least one transceiver, transmitting an RAR UL grant for scheduling the PUSCH through the at least one transceiver, and receiving the PUSCH based on the RAR UL grant through the at least one transceiver. Based on the SIB including a parameter indicating that a CAP is to be applied, the number of bits in a field for indicating a channel access type included in the RAR UL grant is 2, and based on the SIB not including the parameter, the number of bits in the field for indicating a channel access type included in the RAR UL grant is 0.

An apparatus for transmitting a PUSCH in a band of 52.6GHz or higher in a wireless communication system according to an embodiment of the disclosure includes at least one processor, and at least one memory operably coupled to the at least one processor, and storing instructions which when executed, cause the at least one processor to perform operations. The operations include receiving a SIB, receiving an RAR UL grant for scheduling the PUSCH, and transmitting the PUSCH based on the RAR UL grant. Based on the SIB including a parameter indicating that a CAP is to be applied, the number of bits in a field for indicating a channel access type included in the RAR UL grant is 2, and based on the SIB not including the parameter, the number of bits in the field for indicating a channel access type included in the RAR UL grant is 0.

A computer-readable storage medium according to an embodiment of the disclosure includes at least one computer program causing at least one processor to perform operations, and the operations include receiving a SIB, receiving an RAR UL grant for scheduling the PUSCH, and transmitting the PUSCH based on the RAR UL grant. Based on the SIB including a parameter indicating that a CAP is to be applied, the number of bits in a field for indicating a channel access type included in the RAR UL grant is 2, and based on the SIB not including the parameter, the number of bits in the field for indicating a channel access type included in the RAR UL grant is 0.

Advantageous Effects

According to [Method #1] to [Method #3] and [Method #5] of the disclosure, the numbers of bits and interpretations of a frequency resource allocation field and a listen before talk (LBT) type indication field included in a random access response (RAR)/downlink control information (DCI) that schedules an uplink (UL) channel may be determined differently depending on whether LBT should be performed.

Accordingly, UL channel scheduling and LBT type indication may also be effectively performed through the RAR/DCI with a fixed size by changing the use of bits included in the RAR/DCI according to a communication environment of a user equipment (UE) and/or regional regulations.

According to [Method #4] of the disclosure, a parameter csi-RS-ValidationWith-DCI and DCI format 2_0 based on the parameter may be interpreted according to whether LBT is to be performed necessarily, thereby enabling the UE to predict validation of a channel state information-reference signal (CSI-RS) of the UE and thus efficiently receive the CSI-RS.

According to [Method #6] of the disclosure, the UE may transmit information about a sensing beam on which LBT has been performed to a base station (BS), thereby enabling the BS to determine whether it is actually possible to share a COT of the BS. In other words, the BS may determine whether it is possible to actually share a COT by comparing a transmission (Tx) beam of a downlink (DL) channel to be transmitted by the BS with information about a sensing beam on which the COT sharing is based, and perform an appropriate transmission operation accordingly.

The effects obtainable in the disclosure are not limited to the effects mentioned above, and other effects not mentioned are clearly understood by those skilled in the art from the description below.

Brief Description of the Drawings

FIG. 1 illustrates an exemplary wireless communication system supporting an unlicensed band applicable to the disclosure.

FIG. 2 illustrates an exemplary method of occupying resources in an unlicensed band.

FIG. 3 illustrates a channel access procedure of a UE for UL/DL signal transmission in a U-band applicable to the disclosure.

FIG. 4 is a diagram for explaining a plurality of listen before talk-subbands (LBT-SBs) applicable to the disclosure.

FIG. 5 is a diagram illustrating an exemplary 4-step random access channel (RACH) procedure.

FIG. 6 is a diagram illustrating an exemplary 2-step RACH procedure.

FIG. 7 is a diagram illustrating an exemplary contention-free RACH procedure.

FIG. 8 is a diagram illustrating an exemplary uplink (UL) transmission operation of a user equipment (UE).

FIG. 9 is a diagram illustrating beam-based LBT and beam group-based LBT according to an embodiment of the disclosure.

FIG. 10 is a diagram illustrating the structure of medium access control (MAC) payload of an Msg. 2 random access response (RAR).

FIGS. 11 to 13 are diagrams illustrating an overall process of operating a UE and a base station (BS) in [Method #1] to [Method #5] according to the disclosure.

FIGS. 14 to 16 are diagrams illustrating an overall process of operating a UE and a BS in [Method #6] according to the disclosure.

FIG. 17 is a diagram illustrating an exemplary communication system applied to the disclosure.

FIG. 18 is a diagram illustrating wireless devices applicable to the disclosure.

FIG. 19 is a diagram illustrating a vehicle or autonomous driving vehicle applicable to the disclosure.

Best Mode

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the disclosure is not limited to the 3GPP communication system. For the background art, terms, and abbreviations used in the disclosure, refer to the technical specifications published before the disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

Similarly to licensed-assisted access (LAA) in the legacy 3GPP LTE system, use of an unlicensed band for cellular communication is also under consideration in a 3GPP NR system. Unlike LAA, a stand-along (SA) operation is aimed in an NR cell of an unlicensed band (hereinafter, referred to as NR unlicensed cell (UCell)). For example, PUCCH, PUSCH, and PRACH transmissions may be supported in the NR UCell.

On LAA UL, with the introduction of an asynchronous HARQ procedure, there is no additional channel such as a physical HARQ indicator channel (PHICH) for indicating HARQ-ACK information for a PUSCH to the UE. Therefore, accurate HARQ-ACK information may not be used to adjust a contention window (CW) size in a UL LBT procedure. In the UL LBT procedure, when a UL grant is received in the n-th subframe, the first subframe of the most recent UL transmission burst prior to the (n-3)-th subframe has been configured as a reference subframe, and the CW size has been adjusted based on a new data indicator (NDI) for a HARQ process ID corresponding to the reference subframe. That is, when the BS toggles NDIs per one or more transport blocks (TBs) or instructs that one or more TBs be retransmitted, a method has been introduced of increasing the CW size to the next largest CW size of a currently applied CW size in a set for pre-agreed CW sizes under the assumption that transmission of a PUSCH has failed in the reference subframe due to collision with other signals or initializing the CW size to a minimum value (e.g., CWmin) under the assumption that the PUSCH in the reference subframe has been successfully transmitted without any collision with other signals.

In an NR system to which various Embodiments of the disclosure are applicable, up to 400 MHz per component carrier (CC) may be allocated/supported. When a UE operating in such a wideband CC always operates with a radio frequency (RF) module turned on for the entire CC, battery consumption of the UE may increase.

Alternatively, considering various use cases (e.g., eMBB, URLLC, mMTC, and so on) operating within a single wideband CC, a different numerology (e.g., SCS) may be supported for each frequency band within the CC.

Alternatively, each UE may have a different maximum bandwidth capability.

In this regard, the BS may indicate to the UE to operate only in a partial bandwidth instead of the total bandwidth of the wideband CC. The partial bandwidth may be defined as a bandwidth part (BWP).

A BWP may be a subset of contiguous RBs on the frequency axis. One BWP may correspond to one numerology (e.g., SCS, CP length, slot/mini-slot duration, and so on).

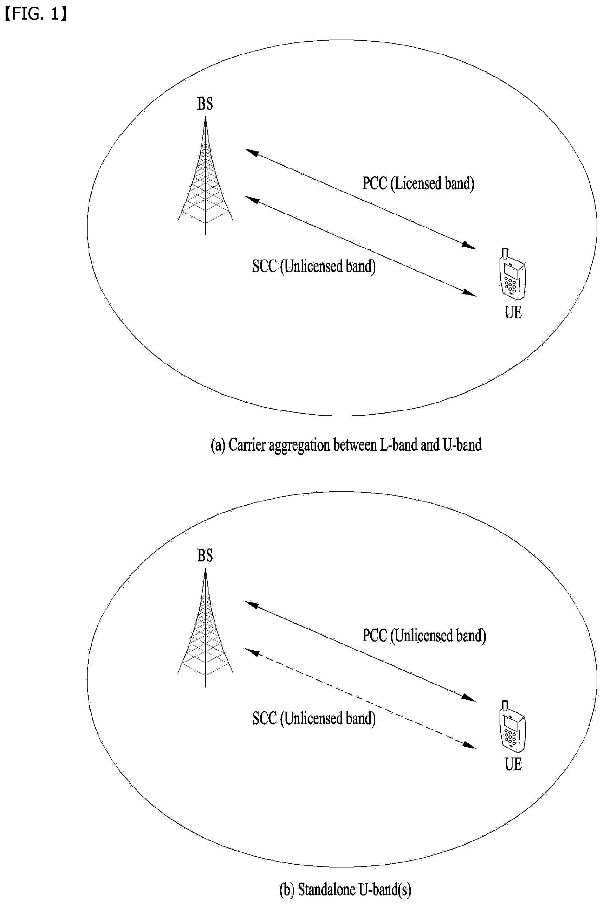

FIG. 1 illustrates an exemplary wireless communication system supporting an unlicensed band applicable to the disclosure.

In the following description, a cell operating in a licensed band (L-band) is defined as an L-cell, and a carrier of the L-cell is defined as a (DL/UL) LCC. A cell operating in an unlicensed band (U-band) is defined as a U-cell, and a carrier of the U-cell is defined as a (DL/UL) UCC. The carrier/carrier-frequency of a cell may refer to the operating frequency (e.g., center frequency) of the cell. A cell/carrier (e.g., CC) is commonly called a cell.

When a BS and a UE transmit and receive signals on carrier-aggregated LCC and UCC as illustrated in FIG. 1(a), the LCC and the UCC may be configured as a primary CC (PCC) and a secondary CC (SCC), respectively. The BS and the UE may transmit and receive signals on one UCC or on a plurality of carrier-aggregated UCCs as illustrated in FIG. 1(b). In other words, the BS and UE may transmit and receive signals only on UCC(s) without using any LCC. For an SA operation, PRACH, PUCCH, PUSCH, and SRS transmissions may be supported on a UCell.

Signal transmission and reception operations in an unlicensed band as described in the disclosure may be applied to the afore-mentioned deployment scenarios (unless specified otherwise).

Unless otherwise noted, the definitions below are applicable to the following terminologies used in the disclosure.

- Channel: a carrier or a part of a carrier composed of a contiguous set of RBs in which a channel access procedure (CAP) is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tsl = 9us. The BS or the UE senses the slot during a sensing slot duration. When power detected for at least 4us within the sensing slot duration is less than an energy detection threshold Xthresh, the sensing slot duration Tsl is be considered to be idle. Otherwise, the sensing slot duration Tsl is considered to be busy. CAP may also be called listen before talk (LBT).

- Channel occupancy: transmission(s) on channel(s) from the BS/UE after a CAP.
- Channel occupancy time (COT): a total time during which the BS/UE and any BS/UE(s) sharing channel occupancy performs transmission(s) on a channel after a CAP. Regarding COT determination, if a transmission gap is less than or equal to 25us, the gap duration may be counted in a COT.

The COT may be shared for transmission between the BS and corresponding UE(s).

Specifically, sharing a UE-initiated COT with the BS may mean an operation in which the UE assigns a part of occupied channels through random backoff counter-based LBT (e.g., Category 3 (Cat-3) LBT or Category 4 (Cat-4) LBT) to the BS and the BS performs DL transmission using a remaining COT of the UE, when it is confirmed that a channel is idle by success of LBT after performing LBT without random backoff counter (e.g., Category 1 (Cat-1) LBT or Category 2 (Cat-2) LBT) using a timing gap occurring before DL transmission start from a UL transmission end timing of the UE.

Meanwhile, sharing a gNB-initiated COT with the UE may mean an operation in which the BS assigns a part of occupied channels through random backoff counter-based LBT (e.g., Cat-3 LBT or Cat-4 LBT) to the UE and the UE performs UL transmission using a remaining COT of the BS, when it is confirmed that a channel is idle by success of LBT after performing LBT without random backoff counter (e.g., Cat-1 LBT or Cat-2 LBT) using a timing gap occurring before UL transmission start from a DL transmission end timing of the BS.

- DL transmission burst: a set of transmissions without any gap greater than 16us from the BS. Transmissions from the BS, which are separated by a gap exceeding 16us are considered as separate DL transmission bursts. The BS may perform transmission(s) after a gap without sensing channel availability within a DL transmission burst.
- UL transmission burst: a set of transmissions without any gap greater than 16us from the UE. Transmissions from the UE, which are separated by a gap exceeding 16us are considered as separate UL transmission bursts. The UE may perform transmission(s) after a gap without sensing channel availability within a DL transmission burst.
- Discovery burst: a DL transmission burst including a set of signal(s) and/or channel(s) confined within a window and associated with a duty cycle. The discovery burst may include transmission(s) initiated by the BS, which includes a PSS, an SSS, and a cell-specific RS (CRS) and further includes a non-zero power CSI-RS. In the NR system, the discover burst includes may include transmission(s) initiated by the BS, which includes at least an SS/PBCH block and further includes a CORESET for a PDCCH scheduling a PDSCH carrying SIB1, the PDSCH carrying SIB1, and/or a non-zero power CSI-RS.

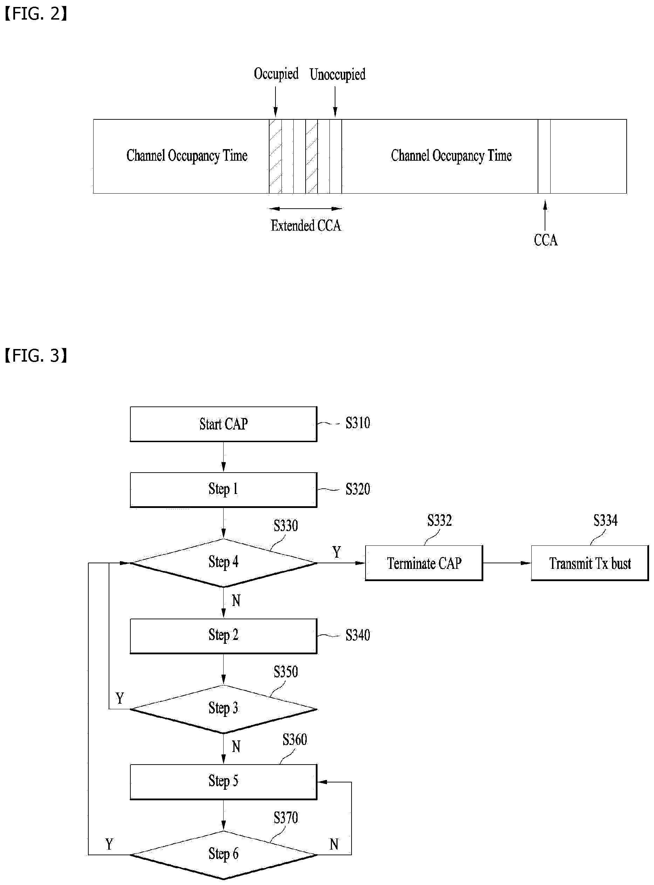

FIG. 2 illustrates an exemplary method of occupying resources in an unlicensed band.

Referring to FIG. 2, a communication node (e.g., a BS or a UE) operating in an unlicensed band should determine whether other communication node(s) is using a channel, before signal transmission. For this purpose, the communication node may perform a CAP to access channel(s) on which transmission(s) is to be performed in the unlicensed band. The CAP may be performed based on sensing. For example, the communication node may determine whether other communication node(s) is transmitting a signal on the channel(s) by carrier sensing (CS) before signal transmission. Determining that other communication node(s) is not transmitting a signal is defined as confirmation of clear channel assessment (CCA). In the presence of a CCA threshold (e.g., Xthresh) which has been predefined or configured by higher-layer (e.g., radio resource control (RRC)) signaling, the communication node may determine that the channel is busy, when detecting energy higher than the CCA threshold in the channel. Otherwise, the communication node may determine that the channel is idle. When determining that the channel is idle, the communication node may start to transmit a signal in the unlicensed band. CAP may be replaced with LBT.

Table 1 describes an exemplary CAP supported in NR-U.

[Table 1]

|  | Type | Explanation |
|---|---|---|
| DL | Type 1 CAP | CAP with random backoff<br><br>- time duration spanned by the sensing slots that are sensed to be idle before a downlink transmission(s) is random |
|  | Type 2 CAP<br><br>- Type 2A, 2B, 2C | CAP without random backoff<br><br>- time duration spanned by sensing slots that are sensed to be idle before a downlink transmission(s) is deterministic |

(continued)

|  | Type | Explanation |
|---|---|---|
| UL | Type 1 CAP | CAP with random backoff |
|  |  | - time duration spanned by the sensing slots that are sensed to be idle before a downlink transmission(s) is random |
|  | Type 2 CAP<br>- Type 2A, 2B, 2C | CAP without random backoff |
|  |  | - time duration spanned by sensing slots that are sensed to be idle before a downlink transmission(s) is deterministic |

In a wireless communication system supporting an unlicensed band, one cell (or carrier (e.g., CC)) or BWP configured for a UE may be a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information. A plurality of LBT-SBs may be included in the BWP of a cell (or carrier). An LBT-SB may be, for example, a 20-MHz band. The LBT-SB may include a plurality of contiguous (P)RBs in the frequency domain, and thus may be referred to as a (P)RB set.

Two LBT operations, frame based equipment (FBE) and load based equipment (LBE) are defined in Europe. In FBE, a fixed frame may include a channel occupancy time (COT) (e.g., 1 to 10ms) during which a communication node may continue transmission once it successfully accesses a channel, and an idle period corresponding to at least 5% of the COT. Further, CCA is defined as an operation of monitoring a channel during a CCA slot (at least $20\mu s$) at the end of the idle period. The communication node performs CCA periodically on a fixed frame basis. When the channel is unoccupied, the communication node transmits data during the COT, whereas when the channel is occupied, the communication node defers the transmission and waits for a CCA slot in a next period.

In LBE, the communicating node first sets a value of $q \in \{4, 5, \dots, 32\}$ and then performs CCA for one CCA slot. When a channel is unoccupied in the first CCA slot, the communication node may transmit data, occupying a time of up to $(13/32)q$ ms. When the channel is occupied in the first CCA slot, the communication node randomly selects a value of $N \in \{1, 2, \dots, q\}$ and stores it as an initial counter value. Then, the communication node senses a channel state on a CCA slot basis, and when the channel is unoccupied on a CCA slot basis, decrements the value stored in the counter by one each time. When the counter value reaches zero, the communication node may transmit data, occupying a maximum time of $(13/32)q$ ms.

In an LTE/NR system, an eNB/gNB or a UE also needs to perform LBT to transmit a signal in an unlicensed band (referred to as a U-band, for convenience). Further, when the eNB or the UE in the LTE/NR system transmits a signal, other communication nodes as for WiFi should also perform LBT to ensure that they do not cause interference to the transmission of the eNB or the UE. For example, the WiFi standard (801.11ac) specifies a CCA threshold as -62dBm for a non-WiFi signal and as -82dBm for a WiFi signal. For example, when a station (STA) or an access point (AP) receives a non-WiFi signal at power equal to or greater than -62dBm, the STA or the AP does not transmit any other signal to avoid causing interference.

In the LTE/NR system, the eNB/gNB or the UE performs a Type 1 or Type 2 CAP for a UL signal transmission in an unlicensed band. In general, the UE may perform a CAP (e.g., Type 1 or Type 2) configured by a BS, for a UL signal transmission. For example, CAP type indication information may be included in a UL grant (e.g., DCI format 0_0 or DCI format 0_1) that schedules a PUSCH transmission.

In the Type 1 UL CAP, the length of a time period spanned by sensing slots sensed as idle before transmission(s) is random. The Type 1 UL CAP may be applied to the following transmissions.

- PUSCH/SRS transmission(s) scheduled and/or configured by BS
- PUCCH transmission(s) scheduled and/or configured by BS
- Transmission(s) related to random access procedure (RAP)

FIG. 3 illustrates Type 1 CAP among channel access procedures of a UE for UL/DL signal transmission in a U-band applicable to the disclosure.

First, UL signal transmission in the U-band will be described with reference to FIG. 3.

The UE may sense whether a channel is idle for a sensing slot duration in a defer duration Td. After a counter N is decremented to 0, the UE may perform a transmission (S334). The counter N is adjusted by sensing the channel for additional slot duration(s) according to the following procedure.

Step 1) Set N=Ninit where Ninit is a random number uniformly distributed between 0 and CWp, and go to step 4 (S320).

Step 2) If N > 0 and the UE chooses to decrement the counter, set N=N-1 (S340).

Step 3) Sense the channel for an additional slot duration, and if the additional slot duration is idle (Y), go to step 4. Else (N), go to step 5 (S350).

Step 4) If N=0 (Y) (S330), stop CAP (S332). Else (N), go to step 2.

Step 5) Sense the channel until a busy sensing slot is detected within the additional defer duration Td or all slots of the additional defer duration Td are sensed as idle (S360).

Step 6) If the channel is sensed as idle for all slot durations of the additional defer duration Td (Y), go to step 4. Else (N), go to step 5 (S370).

Table 2 illustrates that mp, a minimum CW, a maximum CW, a maximum channel occupancy time (MCOT), and an allowed CW size applied to a CAP vary according to channel access priority classes.

[Table 2]

| Cha nnel Access Priority Class (p) | mp | CW min,p | CW max,p | Tul mcot,p | allo wed CWp sizes |
|---|---|---|---|---|---|
| 1 | 2 | 3 | 7 | 2 ms | {3,7 } |
| 2 | 2 | 7 | 15 | 4 ms | {7,1 5} |
| 3 | 3 | 15 | 102 3 | 6 or 10 ms | {15, 31,63,127, 255,511,10 23} |
| 4 | 7 | 15 | 102 3 | 6 or 10 ms | {15, 31,63,127, 255,511,10 23} |

The defer duration Td includes a duration Tf (16us) immediately followed by mp consecutive slot durations where each slot duration Tsl is 9us, and Tf includes a sensing slot duration Tsl at the start of the 16-us duration. CWWmin,p <= CWp <= CWmax,p. CWp is set to CWmin,p, and may be updated before Step 1 based on an explicit/implicit reception response to a previous UL burst (e.g., PUSCH) (CW size update). For example, CWp may be initialized to CWmin,p based on an explicit/implicit reception response to the previous UL burst, may be increased to the next higher allowed value, or may be maintained to be an existing value.

In the Type 2 UL CAP, the length of a time period spanned by sensing slots sensed as idle before transmission(s) is deterministic. Type 2 UL CAPs are classified into Type 2A UL CAP, Type 2B UL CAP, and Type 2C UL CAP. In the Type 2A UL CAP, the UE may transmit a signal immediately after the channel is sensed as idle during at least a sensing duration Tshort_dl (=25us). Tshort_dl includes a duration Tf (=16us) and one immediately following sensing slot duration. In the Type 2A UL CAP, Tf includes a sensing slot at the start of the duration. In the Type 2B UL CAP, the UE may transmit a signal immediately after the channel is sensed as idle during a sensing slot duration Tf (=16us). In the Type 2B UL CAP, Tf includes a sensing slot within the last 9us of the duration. In the Type 2C UL CAP, the UE does not sense a channel before a transmission.

To allow the UE to transmit UL data in the unlicensed band, the BS should succeed in an LBT operation to transmit a UL grant in the unlicensed band, and the UE should also succeed in an LBT operation to transmit the UL data. That is, only when both of the BS and the UE succeed in their LBT operations, the UE may attempt the UL data transmission. Further, because a delay of at least 4 msec is involved between a UL grant and scheduled UL data in the LTE system, earlier access from another transmission node coexisting in the unlicensed band during the time period may defer the scheduled UL data transmission of the UE. In this context, a method of increasing the efficiency of UL data transmission in an unlicensed band is under discussion.

To support a UL transmission having a relatively high reliability and a relatively low time delay, NR also supports CG type 1 and CG type 2 in which the BS preconfigures time, frequency, and code resources for the UE by higher-layer signaling (e.g., RRC signaling) or both of higher-layer signaling and L1 signaling (e.g., DCI). Without receiving a UL grant from the BS, the UE may perform a UL transmission in resources configured with type 1 or type 2. In type 1, the periodicity of a CG, an offset from SFN=0, time/frequency resource allocation, a repetition number, a DMRS parameter, an MCS/TB size (TBS), a power control parameter, and so on are all configured only by higher-layer signaling such as RRC signaling, without L1 signaling. Type 2 is a scheme of configuring the periodicity of a CG and a power control parameter by higher-layer signaling such as RRC signaling and indicating information about the remaining resources (e.g., the offset of an initial transmission timing, time/frequency resource allocation, a DMRS parameter, and an MCS/TBS) by activation DCI as L1 signaling.

The biggest difference between autonomous uplink (AUL) of LTE LAA and a CG of NR is a HARQ-ACK feedback transmission method for a PUSCH that the UE has transmitted without receiving a UL grant and the presence or absence of UCI transmitted along with the PUSCH. While a HARQ process is determined by an equation of a symbol index, a symbol periodicity, and the number of HARQ processes in the CG of NR, explicit HARQ-ACK feedback information is transmitted in AUL downlink feedback information (AUL-DFI) in LTE LAA. Further, in LTE LAA, UCI including information such as a HARQ ID, an NDI, and an RV is also transmitted in AUL UCI whenever AUL PUSCH transmission is performed. In the case of the CG of NR, the BS identifies the UE by time/frequency resources and DMRS resources used for PUSCH transmission, whereas in the case of LTE LAA, the BS identifies the UE by a UE ID explicitly included in the AUL UCI transmitted together with the PUSCH as well as the DMRS resources.

Now, DL signal transmission in the U-band will be described with reference to FIG. 3.

The BS may perform one of the following U-band access procedures (e.g., channel access procedures (CAPs)) to transmit a DL signal in the U-band.

(1) Type 1 DL CAP method

In a Type 1 DL CAP, the length of a time duration spanned by sensing slots that are sensed to be idle before transmission(s) is random. The Type 1 DL CAP may be applied to the following transmissions:

- (i) transmission(s) initiated by the BS, including (i) a unicast PDSCH with user plane data, or (ii) a unicast PDSCH with user plane data and a unicast PDCCH scheduling the user plane data; or
- transmission(s) initiated by the BS, including (i) only a discovery burst, or (ii) a discovery burst multiplexed with non-unicast information.

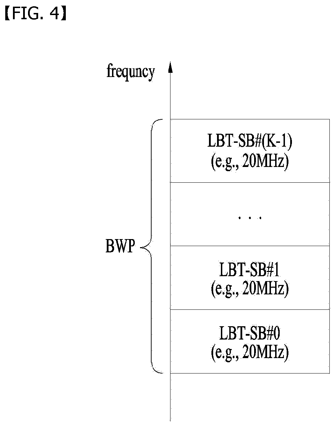

Referring to FIG. 4, the BS may first sense whether a channel is idle for a sensing slot duration of a defer duration Td. Next, if a counter N is decremented to 0, transmission may be performed (S334). The counter N is adjusted by sensing the channel for additional slot duration(s) according to the following procedures.

Step 1) Set N=Ninit where Ninit is a random number uniformly distributed between 0 and CWp, and go to step 4 (S320).

Step 2) If N > 0 and the BS chooses to decrement the counter, set N=N-1 (S340).

Step 3) Sense the channel for an additional slot duration, and if the additional slot duration is idle (Y), go to step 4. Else (N), go to step 5 (S350).

Step 4) If N=0 (Y), stop a CAP (S332)). Else (N), go to step 2 (S330).

Step 5) Sense the channel until a busy sensing slot is detected within the additional defer duration Td or all slots of the additional defer duration Td are sensed to be idle (S360).

Step 6) If the channel is sensed to be idle for all slot durations of the additional defer duration Td (Y), go to step 4. Else (N), go to step 5 (S370).

Table 3 illustrates that mp, a minimum CW, a maximum CW, an MCOT, and an allowed CW size, which are applied to a CAP, vary according to channel access priority classes.

Table 3

| Cha nnel Access Priority Class (p) | mp | CW min,p | CW max,p | Tmc ot,p | allo wed CWp sizes |
|---|---|---|---|---|---|
| 1 | 1 | 3 | 7 | 2 ms | {3,7} |
| 2 | 1 | 7 | 15 | 3 ms | {7,1 5} |
| 3 | 3 | 15 | 63 | 8 or 10 ms | {15, 31,63} |
| 4 | 7 | 15 | 102 3 | 8 or 10 ms | {15, 31,63,127, 255,511,10 23} |

The defer duration Td includes a duration Tf (16 μs) immediately followed by mp consecutive sensing slot durations where each sensing slot duration Tsl is 9 μs, and Tf includes the sensing slot duration Tsl at the start of the 16-μs duration.

CWmin,p <= CWp <= CWmax,p. CWp is set to CWmin,p, and may be updated (CW size update) before Step 1 based on HARQ-ACK feedback (e.g., ratio of ACK signals or NACK signals) for a previous DL burst (e.g., PDSCH). For example, CWp may be initialized to CWmin,p based on HARQ-ACK feedback for the previous DL burst, may be increased to the next highest allowed value, or may be maintained at an existing value.

(2) Type 2 DL CAP method

In a Type 2 DL CAP, the length of a time duration spanned by sensing slots sensed to be idle before transmission(s) is deterministic. Type 2 DL CAPs are classified into Type 2A DL CAP, Type 2B DL CAP, and Type 2C DL CAP.

The Type 2A DL CAP may be applied to the following transmissions. In the Type 2A DL CAP, the BS may transmit a signal immediately after a channel is sensed to be idle during at least a sensing duration Tshort_dl = 25 μs. Tshort_dl includes a duration Tf (= 16 μs) and one immediately following sensing slot duration. Tf includes the sensing slot at the start of the duration.

- Transmission(s) initiated by the BS, including (i) only a discovery burst, or (ii) a discovery burst multiplexed with non-unicast information, or
- Transmission(s) of the BS after a gap of 25 μs from transmission(s) by the UE within shared channel occupancy.

The Type 2B DL CAP is applicable to transmission(s) performed by the BS after a gap of 16 μs from transmission(s) by the UE within shared channel occupancy. In the Type 2B DL CAP, the BS may transmit a signal immediately after a channel is sensed to be idle during Tf=16 μs. Tf includes a sensing slot within the last 9 μs of the duration. The Type 2C DL CAP is applicable to transmission(s) performed by the BS after a maximum of a gap of 16 μs from transmission(s) by the UE within shared channel occupancy. In the Type 2C DL CAP, the BS does not sense a channel before performing transmission.

In a wireless communication system supporting a U-band, one cell (or carrier (e.g., CC)) or BWP configured for the UE may consist of a wideband having a larger BW than in legacy LTE. However, a BW requiring CCA based on an independent LBT operation may be limited according to regulations. If a subband (SB) in which LBT is individually performed is defined as an LBT-SB, a plurality of LBT-SBs may be included in one wideband cell/BWP. A set of RBs constituting an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 4 illustrates that a plurality of LBT-SBs is included in a U-band.

Referring to FIG. 4, a plurality of LBT-SBs may be included in the BWP of a cell (or carrier). An LBT-SB may be, for example, a 20-MHz band. The LBT-SB may include a plurality of contiguous (P)RBs in the frequency domain and thus may be referred to as a (P)RB set. Although not illustrated, a guard band (GB) may be included between the LBT-SBs. Therefore, the BWP may be configured in the form of {LBT-SB #0 (RB set #0) + GB #0 + LBT-SB #1 (RB set #1 + GB #1) + ... + LBT-SB #(K-1) (RB set (#K-1))}. For convenience, LBT-SB/RB indexes may be configured/defined to be increased as a frequency band becomes higher starting from a low frequency band.

Random Access Channel (RACH) procedure

When a UE first accesses a BS or has no radio resource for signal transmission, the UE may perform a RACH procedure upon the BS.

The RACH procedure may be used for various purposes. For example, the RACH procedure may be used for initial network access from RRC_IDLE, an RRC connection re-establishment procedure, handover, UE-triggered UL data transmission, transition from RRC_INACTIVE, time alignment establishment in SCell addition, other system information (OSI) request and beam failure recovery, and so on. The UE may acquire UL synchronization and UL transmission resources from the RACH procedure.

The RACH procedure may be divided into a contention-based RACH procedure and a contention-free RACH procedure. The contention-based RACH procedure may be divided into a 4-step RACH procedure (4-step RACH) and a 2-step RACH procedure (2-step RACH).

(1) 4-step RACH : Type-1 random access procedure

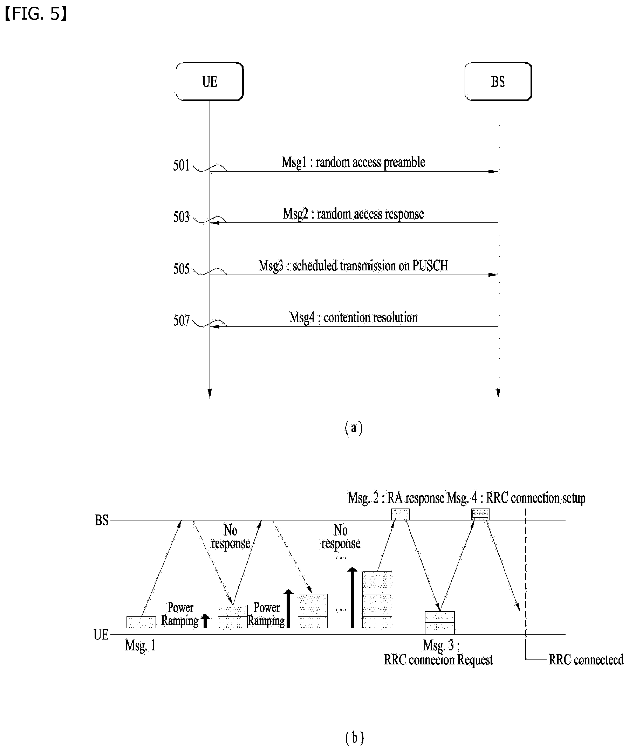

FIG. 5 is a diagram illustrating an exemplary 4-step RACH procedure.

When a (contention-based) random access procedure is performed in four steps (4-step RACH procedure), the UE may transmit a message (message 1 (Msg1)) including a preamble related to a specific sequence through a physical random access channel (PRACH) (501) and receive a PDCCH and a random access response (RAR) message (message 2 (Msg2)) through a PDSCH corresponding to the PDCCH (503). The UE may transmit a message (message 3 (Msg3)) including a physical uplink shared channel (PUSCH) using scheduling information included in the RAR (505) and perform a contention resolution procedure such as reception of a PDCCH signal and a PDSCH signal corresponding to the PDCCH signal. The UE may receive a message (message 4 (Msg4)) including contention resolution information for the contention resolution procedure from a BS (507).

The 4-step RACH procedure of the UE may be summarized in Table 4 below.

[Table 4]

| | Type of Signals | Operations/Information obtained |
|---|---|---|
| 1st step | PRACH preamble in UL | * Initial beam obtainment |
| | | * Random selection of RA-preamble ID |
| 2nd step | Random Access Response on DL-SCH | * Timing Advanced information |
| | | * RA-preamble ID |
| | | * Initial UL grant, Temporary C-RNTI |
| 3rd step | UL transmission on UL-SCH | * RRC connection request |
| | | * UE identifier |
| 4th step | Contention Resolution on DL | * Temporary C-RNTI on PDCCH for initial access |
| | | * C-RNTI on PDCCH for UE in RRC CONNECTED |

First, the UE may transmit a random access preamble over a PRACH in UL as Msg1 of the RACH procedure.

Random access preamble sequences of two different lengths are supported. Long sequence length 839 is applied with SCSs of 1.25 and 5 kHz, and short sequence length 139 is applied with SCSs of 15, 30, 60 and 120 kHz.

Multiple preamble formats are defined by one or more RACH OFDM symbols and different cyclic prefixes (and/or guard times). The RACH configuration for the initial bandwidth of a primary cell (Pcell) may be included in system information of the cell and provided to the UE. The RACH configuration includes information on the SCS of the PRACH, available preambles, preamble formats, and the like. The RACH configuration includes information on association between SSBs and RACH (time-frequency) resources. The UE transmits the random access preamble on a RACH time-frequency resource associated with a detected or selected SSB.

The threshold of SSBs may be configured by the network for association with RACH resources. The RACH preamble may be transmitted or retransmitted based on SSB(s) having reference signal received power (RSRP) measured based thereon satisfying the threshold. For example, the UE may select one of the SSB(s) that satisfy the threshold and transmit or retransmit the RACH preamble based on a RACH resource associated with the selected SSB. For example, upon retransmission of the RACH preamble, the UE may reselect one of the SSB(s) and retransmit the RACH preamble based on a RACH resource associated with the reselected SSB. That is, the RACH resource for retransmission of the RACH preamble may be the same as and/or different from the RACH resource for transmission of the RACH preamble.

When the BS receives a random access preamble from the UE, the BS transmits an RAR message (Msg2) to the UE. A PDCCH scheduling a PDSCH carrying the RAR is cyclic redundancy check (CRC) scrambled with a random access (RA) radio network temporary identifier (RNTI) (RA-RNTI) and then transmitted. Upon detecting the PDCCH CRC-scrambled with the RA-RNTI, the UE may receive the RAR from the PDSCH scheduled by DCI carried on the PDCCH. The UE checks whether the RAR includes RAR information in response to the preamble transmitted by the UE, i.e., Msg1. The presence or absence of the RAR information in response to Msg1 transmitted by the UE may be determined depending on whether there is a random access preamble ID for the preamble transmitted by the UE. If there is no response to Msg1, the UE may retransmit the RACH preamble within a predetermined number of times while performing power ramping. The UE may calculate PRACH transmission power for retransmitting the preamble based on the most recent transmission power, power increment, and power ramping counter.

The RAR information may include a preamble sequence transmitted by the UE, a temporary cell-RNTI (TC-RNTI) allocated by the BS to the UE that has attempted random access, and UL transmit time alignment information, UL transmission power adjustment information, and UL radio resource allocation information. If the UE receives the RAR information for itself on the PDSCH, the UE may obtain timing advance information for UL synchronization, an initial UL grant, a TC- RNTI. The timing advance information may be used to control a UL signal transmission timing. To better align PUSCH/PUCCH transmission by the UE with the subframe timing at the network, the network (e.g., BS) may obtain the timing advance information based on timing information detected from a PRACH preamble received from the UE and transmit the timing advance information to the UE. The UE may transmit a UL signal over a UL shared channel based on the RAR information as Msg3 of the RACH procedure. Msg3 may include an RRC connection request and a UE identifier. In response to Msg3, the network may transmit Msg4, which may be treated as a contention resolution message on DL. Upon receiving Msg4, the UE may enter the RRC_CONNECTED state.

As described above, a UL grant in an RAR schedules a PUSCH transmission to the BS. A PUSCH carrying an initial UL transmission based on the UL grant included in the RAR is also called an Msg3 PUSCH. The content of the UL grant in the RAR starts with a most significant bit (MSB) and ends with a least significant bit (LSB), and is given in Table 5.

Table 5

| RAR grant field | Number of bits |
|---|---|
| Frequency hopping flag | 1 |
| PUSCH frequency resource allocation | 14 |
| PUSCH time resource allocation | 4 |
| MCS | 4 |
| TPC command for PUSCH | 3 |
| CSI request | 1 |

The TPC command is used to determine the transmission power of the Msg3 PUSCH and interpreted according to, for example, Table 6.

[Table 6]

| TPC command | value [dB] |
|---|---|
| 0 | -6 |
| 1 | -4 |
| 2 | -2 |
| 3 | 0 |
| 4 | 2 |
| 5 | 4 |
| 6 | 6 |
| 7 | 8 |

(2) 2-step RACH : Type-2 random access procedure

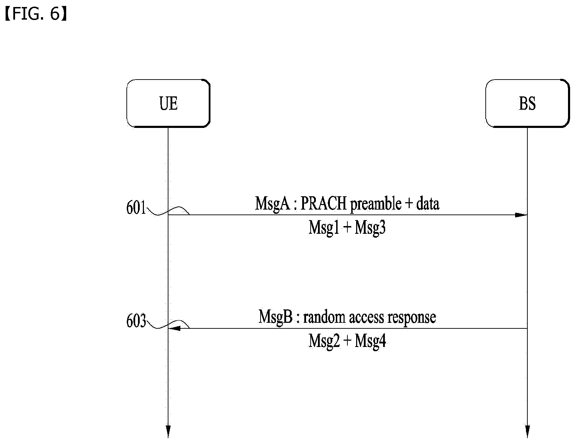

FIG. 6 is a diagram illustrating an exemplary 2-step RACH procedure.

The 2-step RACH procedure in which the (contention-based) RACH procedure is performed in two steps has been proposed to simplify the RACH procedure, that is, to achieve low signaling overhead and low latency.

The operations of transmitting Msg1 and Msg3 in the 4-step RACH procedure may be performed as one operation in the 2-step RACH procedure where the UE transmits one message (message A (MsgA)) including a PRACH and a PUSCH. The operations in which the BS transmits Msg2 and Msg4 in the 4-step RACH procedure may be performed as one operation in the 2-step RACH procedure where the BS transmits one message (message B (MsgB)) including an RAR and contention resolution information.

That is, in the 2-step RACH procedure, the UE may combine Msg1 and Msg3 of the 4-step RACH procedure into a single message (e.g., MsgA) and transmit the single message to the BS (601).

Further, in the 2-step RACH procedure, the UE may combine Msg2 and Msg4 of the 4-step RACH procedure into a single message (e.g., MsgB) and transmit the single message to the BS (603).

Based on the combination of these messages, the 2-step RACH procedure may provide a low-latency RACH procedure.

Specifically, MsgA of the 2-step RACH procedure may include a PRACH preamble contained in Msg1 and data contained in Msg3. MsgB of the 2-step RACH procedure may include an RAR contained in Msg2 and contention resolution information contained in Msg4.

(3) Contention-free RACH

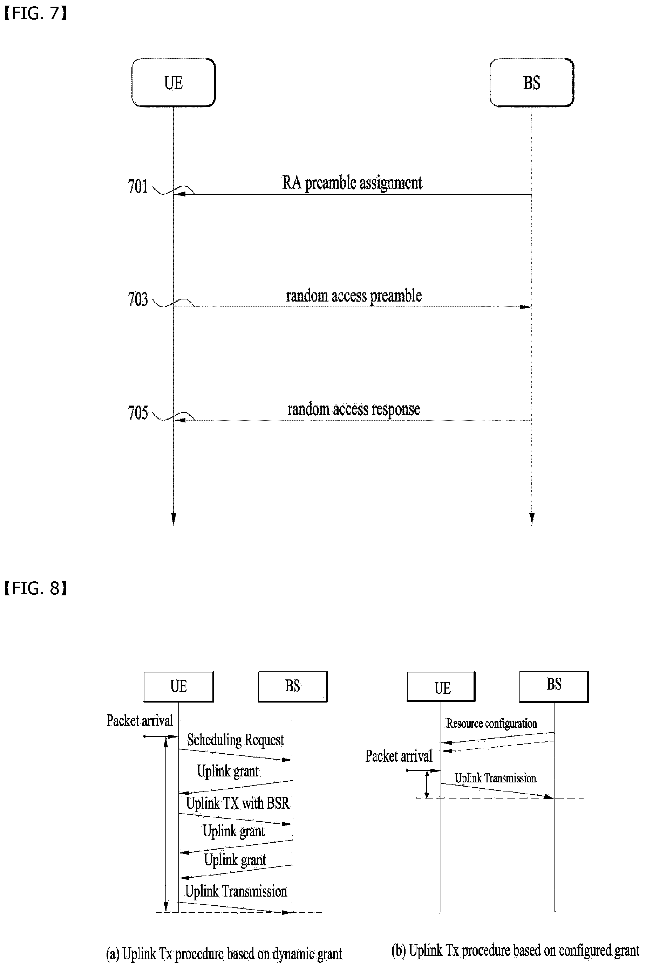

FIG. 7 is a diagram illustrating an exemplary contention-free RACH procedure.

The contention-free RACH procedure may be used during handover of a UE to another cell or BS or upon request by a command from the BS. The basic process of the contention-free RACH procedure is similar to the contention-based RACH procedure. However, compared to the contention-based RACH procedure in which the UE randomly selects a preamble to be used from among a plurality of random access preambles, a preamble (hereinafter, referred to as a dedicated random access preamble) to be used by the UE is assigned to the UE by the BS in the contention-free RACH procedure (701). Information about the dedicated random access preamble may be included in an RRC message (e.g., handover command) or provided to the UE through a PDCCH order. When the RACH procedure is initiated, the UE transmits the dedicated random access preamble to the BS (703). When the UE receives an RAR from the BS, the RACH procedure is completed (705).

In the contention-free RACH procedure, a CSI request field in an RAR UL grant indicates whether the UE includes an aperiodic CSI report in corresponding PUSCH transmission. The SCS for Msg3 PUSCH transmission is provided by an RRC parameter. The UE may transmit a PRACH and a Msg3 PUSCH on the same UL carrier of the same serving cell. The UL BWP for Msg3 PUSCH transmission is indicated by system information block 1 (SIB1).

FIG. 8 illustrates an exemplary UL transmission operation of a UE. The UE may transmit a packet to be transmitted, based on a dynamic grant (FIG. 8(a)) or based on a preconfigured grant (FIG. 8(b)).

For UL, a BS may dynamically allocate resources for a UL transmission to the UE through PDCCH(s) (including DCI format 0_0 or DCI format 0_1). Additionally, the BS may allocate UL resources for an initial HARQ transmission to the UE based on a configured grant method (similar to SPS). However, UL resources for a retransmission are explicitly allocated through PDCCH(s). In this way, an operation of preconfiguring UL resources without a dynamic grant (e.g., a UL grant in scheduling DCI) by the BS is called a 'configured grant'. Two types of configured grants are defined as follows.

- Type 1: a UL grant with a predetermined periodicity is provided by higher-layer signaling (without L1 signaling).
- Type 2: the periodicity of a UL grant is configured by higher-layer signaling, and activation/deactivation of the CG is signaled by a PDCCH, to provide the UL grant.

Resources for CGs may be shared between a plurality of UEs. A UL signal transmission based on a CG from each UE may be identified by time/frequency resources and an RS parameter (e.g., a different cyclic shift or the like). Therefore, when a UE fails in transmitting a UL signal due to signal collision, the BS may identify the UE and explicitly transmit a retransmission grant for a corresponding TB to the UE.

K repeated transmissions including an initial transmission are supported for the same TB by a configured grant. A HARQ process ID for the UL signal which is repeatedly transmitted K times is determined equally based on resources for the initial transmission. The redundancy versions of a TB, which is repeatedly transmitted K times, have one of patterns {0,2,3,1}, {0,3,0,3}, and {0,0,0,0}.

The UE performs repeated transmissions until one of the following conditions is satisfied:

- A UL grant for the same TB is successfully received;
- The repetition number of the TB reaches K; and
- The ending time of a period P is reached.

In a situation such as an initial access or an RRC reconfiguration, fallback DCI (e.g., DCI format 0_1 or DCI format 1_0) may be used for UL scheduling. Unlike a licensed band, the implementation of a spectrum sharing mechanism such as LBT in a non-licensed band (i.e., a shared spectrum) may be required according to a country/region. Therefore, an LBT procedure may be required not only for initial access but also before all transmissions.

Therefore, when a BS performs UL scheduling for a UE in a country/region where an LBT procedure is required, the BS should always indicate an LBT type to be used for a UL transmission. However, LBT is not required even in an unlicensed band in a certain country/region where LBT is not required, and thus the unlicensed band may be operated without an LBT type indication like a licensed band. Therefore, the disclosure proposes a method of configuring a field for indicating an LBT type (i.e., a channel access type) in fallback DCI, an RAR UL grant, or SuccessRAR, which is transmitted in a high-frequency unlicensed band (e.g., from 52.6GHz to 71GHz) according to an LBT mode, a method of indicating an LBT type (i.e., a channel access type), and a method of validating a CSI-RS.

The disclosure is based on the assumption that a UE operates in a shared spectrum band between 52.6GHz to 71GHz, which is a high-frequency unlicensed band. The shared spectrum band between 52.6GHz and 71GHz may be referred to as frequency range 2-2 (FR 2-2), for convenience.

A representative channel access procedure performed for transmission in an unlicensed band is LBT. LBT is a mechanism in which the interference level of the surroundings measured by a BS and/or a UE to transmit a signal is compared with a specific threshold such as an energy detection (ED) threshold, and when a noise level is equal to or lower than a certain level, transmission of the signal is allowed, thereby avoiding collision between transmissions.

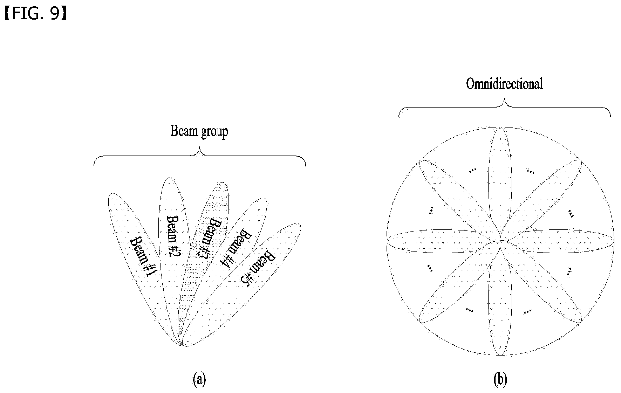

FIG. 9 illustrates an example of directional LBT and omni-directional LBT.

FIG. 9(a) illustrates directional LBT including specific beam direction LBT and/or beam group-based LBT, and FIG. 9(b) illustrates omni-directional LBT.

In the legacy NR-U system (e.g., Rel-16 NR-U), when a channel is determined to be idle in a CAP (i.e., LBT), a DL/UL signal/channel is transmitted, as described with reference to FIG. 7. In the legacy NR-U system, an LBT band is matched with other RATs (e.g., Wi-Fi), for compatibility with the other RATs, and a CAP (i.e., LBT) is performed omni-directionally. In other words, non-directional LBT is performed in the legacy NR-U system.

However, in Rel-17 NR-U for transmitting a DL/UL signal/channel in a higher band (e.g., 52.6GHz or higher) than in an unlicensed band of 7GHz used in the legacy NR-U system, directional LBT (D-LBT) in which a transmission is performed by concentrating energy in a specific beam direction may be used to overcome greater path loss than in the legacy 7GHz band. In other words, Rel-17 NR-U enables transmission of a DL/UL signal/channel over wider coverage and increases efficiency for co-existence with other RATs (e.g., WiGig) by reducing path loss through D-LBT.

Referring to FIG. 9(a), when a beam group includes beam #1 to beam #5, performing LBT based on beam #1 to beam #5 may be referred to as beam group-based LBT. Additionally, performing LBT through any one (e.g., beam #3) of beam #1 to beam #5 may be referred to as specific beam direction LBT. Beam #1 to beam #5 may be continuous (or adjacent) beams or discontinuous (or non-adjacent) beams. Further, a beam group does not necessarily include a plurality of beams, and a single beam may form one beam group.

LBT may be performed on a beam basis or on a beam group basis. For example, when LBT is performed on a beam basis, each of beam #1 to beams #5 may cover one of a plurality of transmission beams multiplexed in time domain multiplexing (TDM) and/or spatial domain multiplexing (SDM). For example, beam #1 may cover transmission beam #1 among a plurality of transmission beams multiplexed in TDM and/or SDM, beam #2 may cover transmission beam #2 among the plurality of transmission beams, beam #3 may cover transmission beam #3 among the plurality of transmission beams, beam #4 may cover transmission beam #4 among the plurality of transmission beams, and beam #5 may cover transmission beam #5 among the plurality of transmission beams. Herein, cover may mean that the area of a beam for performing LBT includes or is at least the same as an area where a transmission beam corresponding to the beam has effective influence (or interference).

In other words, this may mean performing energy measurement through a sensing beam for performing LBT, which covers an area affected by interference from a transmission beam. Further, it may be determined whether a channel is idle/busy by comparing energy measured through the sensing beam with an ED threshold.

In another example, performing LBT on a beam group basis may mean performing LBT for each beam group at once for a plurality of TDM and/or SDM transmission beams corresponding to beams included in the beam group. That is, one beam (hereinafter, referred to as a group LBT beam) may be formed for a beam group, and LBT may be performed on all of a plurality of transmission beams at once using the group LBT beam.

Accordingly, the group LBT beam may cover all transmission beams (e.g., transmission beam #1 to transmission beam #5) corresponding to the beam group. For example, it may mean that the area of the group LBT beam includes all of areas where the respective transmission beams (e.g., transmission beam #1 to transmission beam #5) have effective influence (or interference), or is at least the same as the areas.

FIG. 9(b) illustrates omni-directional LBT. When omni-directional beams form one beam group and LBT is performed on a beam group basis, it may be considered as omni-directional LBT. In other words, when beams in all directions, that is, omni-directional beams, which are a set of beams covering a specific sector in a cell, are included in one beam group, this may mean omni-directional LBT.

In other words, coverage may be limited due to greater path loss in a high frequency band. To overcome this coverage problem, a multi-antenna technique may be used. For example, a narrow beam transmission may be performed, which is a signal transmission by concentrating energy in a specific direction rather than an omni-directional transmission.

In the high-frequency unlicensed band, a beam-based transmission and a channel access procedure such as the above-described LBT need to be considered together. For example, to perform directional LBT (D-LBT) in a specific direction, the directional LBT may be performed in the specific direction or LBT may be performed on the basis of a beam group including a beam in the specific direction. Through the LBT, it may be determined whether a channel is occupied (i.e., whether the channel is idle/busy) and then a transmission may be performed accordingly. The beam group may include one or more beams, and when it includes omni-directional beams, the LBT may be extended to omni-directional LBT (O-LBT).

Before a description of proposed methods, NR-based channel access schemes for an unlicensed band used in the disclosure are classified as follows.

- Category 1 (Cat-1): Within a COT, the next transmission is performed immediately after a short switching gap from the end of the previous transmission, and this switching gap is shorter than a certain length (e.g. 3us) and includes even a transceiver turnaround time. Cat-1 LBT may correspond to Type 2C CAP described above.
- Category 2 (Cat-2): an LBT method without backoff. Once a channel is confirmed to be idle during a specific time period shortly before transmission, the transmission may be performed immediately. Cat-2 LBT may be subdivided according to the length of a minimum sensing duration required for channel sensing immediately before a transmission. For example, Cat-2 LBT with a minimum sensing duration of 25 us may correspond to the above-described Type 2A CAP, and Cat-2 LBT with a minimum sensing duration of 16 us may correspond to the above-described Type 2B CAP. The minimum sensing durations are merely exemplary, and a minimum sensing duration less than 25 us or 16 us (e.g., a minimum sensing duration of 9 us) may also be available.

- Category 3 (Cat-3): an LBT method with fixed contention window size (CWS)i-based backoff. A transmitting entity selects a random number N in a range of 0 to a (fixed) maximum CWS value and decrements a counter value each time it determines that a channel is idle. When the counter value reaches 0, the transmitting entity is allowed to perform a transmission.

- Category 4 (Cat-4): an LBT method with variable CWS-based backoff. A transmitting entity selects a random number N in a range of 0 to a (variable) maximum CWS value and decrements a counter value, each time it determines that a channel is idle. When the counter value reaches 0, the transmitting entity is allowed to perform a transmission. If the transmitting entity receives a feedback indicating reception failure of the transmission, the transmitting entity increases the maximum CWS value by one level, selects a random number again within the increased CWS value, and performs an LBT procedure. Cat-4 LBT may correspond to the above-described Type 1 CAP.

In the disclosure, a beam-based or beam group-based LBT procedure may basically refer to a backoff-based LBT procedure (e.g., Cat-3 LBT or Cat-4 LBT). Further, in beam-based LBT, carrier sensing may be performed in a specific beam direction, and measured energy is compared with an ED threshold. When the measured energy is lower than the ED threshold, a channel in the beam direction may be determined to be idle, whereas when the measured energy is higher than the ED threshold, the channel in the beam direction may be determined to be busy.

The beam group-based LBT procedure is to perform the same LBT procedure as described above for all beam directions included in a beam group, except that when a beam in a specific preset/indicated direction in the beam group is set as a representative beam, a random backoff-based LBT procedure (e.g., Cat-3 LBT or Cat-4 LBT) is performed for the representative beam, similarly to multi-CC LBT, while Cat-2 LBT is performed for the remaining beams of the beam group, so that a signal is transmitted upon success.

Each of the proposed methods described below may be applied in combination with other proposed methods, unless they contract each other.

As described before, because implementation of a spectrum sharing mechanism such as LBT may or may not be required even in an unlicensed band according to country/regional regulations, a BS may broadcast the operating mode of a cell operating in an area where LBT is not required. For example, the BS may broadcast through cell common information (e.g., SIB1) whether LBT is required prior to transmission. A UE may determine whether to perform LBT before transmission based on LBT mode information transmitted by the BS. Further, the process of determining whether to perform LBT before transmission may be applied, starting from an initial access such as an RACH procedure. Further, the LBT mode information is information indicating whether the LBT mode is ON or OFF. When the LBT mode is ON, the UE should perform LBT before a transmission according to the LBT mode information indicated by the BS, and when the LBT mode is OFF, the UE does not need to perform LBT before a transmission and may perform the transmission directly without LBT, such as a transmission in a licensed band.

In a situation such as an initial access or an RRC reconfiguration, fallback DCI (e.g., DCI format 0_1 and DCI format 1_0) may be used for UL scheduling. In particular, an LBT type indication by an RAR UL grant is required for transmission of an msg3 PUSCH in a region where LBT is mandatory for an initial access. When the UE identifies from a system information block (SIB) that the cell operates with LBT mode=OFF, it may operate as in a licensed band without the need of an LBT type indication by an RAR UL grant, since LBT is not required prior to a transmission.

Further, it may be determined whether to indicate Cat-2 LBT (i.e., Type 2 CAP) among different LBT types depending on a country/region and UE capabilities. For example, when LBT mode=ON, random backoff-based LBT (e.g., Cat-3 LBT or Cat-4 LBT) may be set as a default LBT type, and when COT sharing is allowed to share a COT acquired based on the default LBT type, Cat-1 LBT or Cat-2 LBT may be indicated.

When COT sharing is allowed, the remaining COT after completion of a DL/UL transmission in a COT acquired by the BS or the UE may be transferred to the UE or the BS. The UE or the BS with which the COT is shared may perform a UL/DL transmission after performing Cat-1 LBT or Cat-2 LBT within the COT. For example, in the case where the BS performs a 3-ms DL transmission in a 5-ms COT acquired by performing LBT in the direction of beam A, the QCL top source RS of beam A used by the BS to acquire the COT through a group common-PDCCH (i.e., GC-PDCCH) is SSB index #1, and the QCL top source RS of a UL signal/channel (e.g., PUSCH/PUCCH) that the UE intends to transmit is also SSB index #1, when frequency resources used for the DL transmission are the same as or include UL transmission resources, and the BS informs the UE that the remaining 2-ms COT is available for the UL transmission, the UE may switch to Cat-1 LBT or Cat-2 LBT and use the remaining 2ms for the UL transmission, even if random backoff-based LBT (e.g. Cat-3 LBT or Cat-4 LBT) is indicated before the PUSCH transmission.

When the top QCL source SSB index of the UL signal/channel (e.g. PUSCH/PUCCH) to be transmitted by the UE is different from that of the BS, the UL transmission resources are not included in the DL transmission resources, or the UL duration of the transmission exceeds an MCOT of 5ms (i.e. when the UL transmission is longer than the remaining 2-ms COT length), the UE is not allowed to share the COT by switching the LBT type indicated to the UE.

The relevant part of the standard document 3GPP TS 37.213 related to the LBT mode is described in [Table 7].

[Table 7]

| |
|---|
| When a gNB/UE(s) is required by regulations to sense channel(s) for availability for performing transmission(s) on the channel(s) or when a gNB provides UE(s) with higher layer parameters *LBT-Mode* by SIB1 or dedicated configuration indicating that the channel access procedures would be performed for performing transmission(s) on channel(s), the channel access procedures described in this clause for accessing the channel(s) on which the transmission(s) are performed by the gNB/UE(s), are applied. |

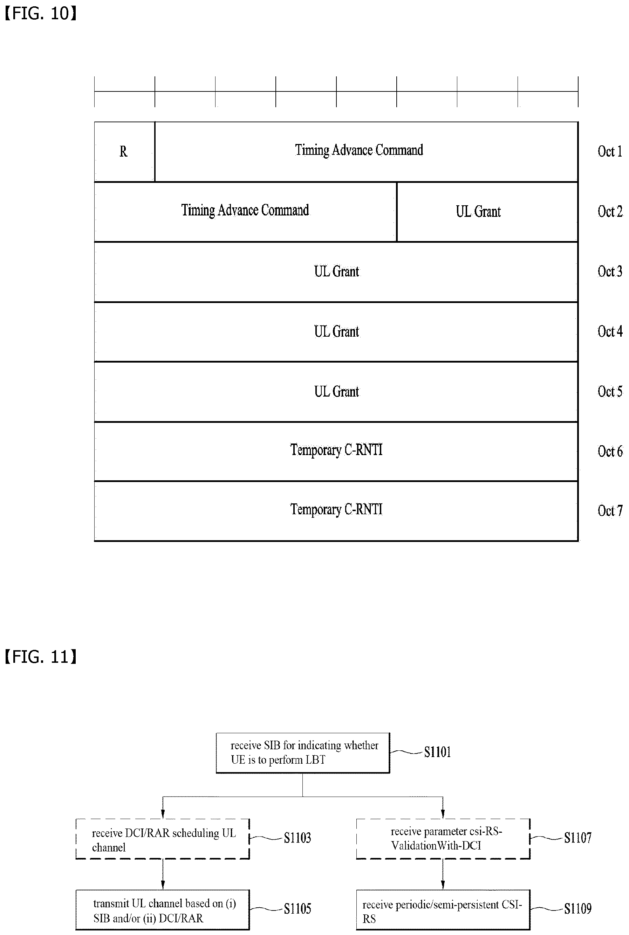

Therefore, the BS does not explicitly configure whether LBT mode=ON/OFF hereinbelow. In other words, when a parameter corresponding to the LBT mode is enable or the parameter corresponding to the LBT mode is set, it may be interpreted as LBT mode=ON. Otherwise, it may be interpreted as LBT mode=OFF. For example, when SIB1 does not include the parameter corresponding to the LBT mode, it may be interpreted as LBT mode=OFF. Since the LBT operation is a channel access procedure for channel access, the LBT mode may be referred as a channel access mode. Accordingly, the parameter LBT-Mode in [Table 7] may be replaced with a parameter Channel Access Mode. The Msg. 2 RAR of the 4-step RACH procedure is defined in FIG. 10.

Further, 27 bits included in the UL grant of the RAR are defined in [Table 8].

Table 8]

| RAR grant field | Number of bits |
|---|---|
| Frequency hopping flag | 1 |
| PUSCH frequency resource allocation | 14 |
| PUSCH time resource allocation | 4 |
| MCS | 4 |
| TPC command for PUSCH | 3 |
| CSI request | 1 |

Further, the CSI request field may be used or reserved depending on contention or non-contention, as described in [Table 9].

Table 9

| |
|---|
| In a non-contention based random access procedure, the CSI request field in the RAR UL grant indicates whether or not the UE includes an aperiodic CSI report in the corresponding PUSCH transmission according to [6, TS 38.214]. In a contention based random access procedure, the CSI request field is reserved. |

As described above, since the LBT type of the Msg. 3 PUSCH is indicated by the RAR, a field for indicating an LBT type may be configured according to the following methods depending on the LBT mode of a cell configured through an SIB, to indicate the LBT type.

FIGS. 11 to 13 are diagrams illustrating an overall process of operating a UE and a BS according to [Method #1] to [Method #5] of the disclosure.

Referring to FIG. 11, the UE may receive an SIB for indicating whether the UE should perform LBT when transmitting a UL channel (S1101). Further, the UE may receive DCI or an RAR that schedules the UL channel (e.g., PUSCH/PUCCH) (S1103). The UE may interpret bits included in the DCI or the RAR based on whether to perform LBT as indicated by the SIB, and transmit the UL channel (e.g., PUSCH/PUCCH) based on information of the interpreted bits (S1105). A specific method of performing S1101 to S1105 described above may be based on at least one of [Method #1], [Method #2], [Method #3], or [Method #5]. For example, when the specific method is based on at least one of [Method #1], [Method #2], or [Method #3], the UL channel may be a dynamic grant-PUSCH (DG-PUSCH), an Msg 3. PUSCH, or an Msg A. PUSCH. Further, when the specific method is based on [Method #5], step S1103 may be skipped, and the UE may transmit the UL channel based on whether to perform LBT as indicated by the SIB.

After step S1101, the UE may receive a parameter csi-RS-ValidationWith-DCI (S1107). However, S1107 may be skipped based on the received SIB. The UE may receive a periodic/semi-persistent CSI-RS based on the received SIB (S1109). Detailed operations of S1101, S1107, and S1109 may be based on [Method #4].

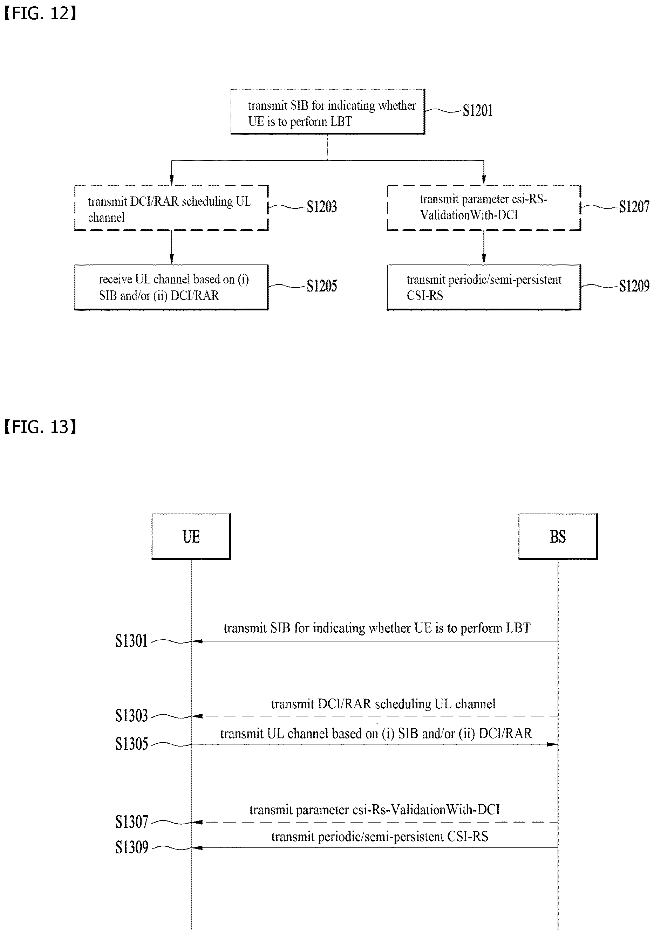

Referring to FIG. 12, the BS may transmit an SIB for indicating whether the UE should perform LBT when transmitting a UL channel (S1201). Further, the BS may transmit DCI or an RAR which schedules the UL channel (e.g.,

PUSCH/PUCCH) (S1203). The BS may receive the UL channel (e.g., PUSCH/PUCCH) based on the SIB and the DCI or RAR (S1205). A specific method of performing S1201 to S1205 described above may be based on at least one of [Method #1], [Method #2], [Method #3], or [Method #5]. For example, when the specific method is based on at least one of [Method #1], [Method #2], or [Method #3], the UL channel may be a DG-PUSCH, an Msg 3. PUSCH, or an Msg A. PUSCH. Further, when the specific method is based on [Method #5], step S1203 may be skipped, and the BS may receive the UL channel based on whether LBT is to be performed.

After step S1201, the BS may transmit a parameter csi-RS-ValidationWith-DCI (S1207). However, S1207 may be skipped based on the transmitted SIB. The BS may transmit a periodic/semi-persistent CSI-RS based on the transmitted SIB (S1209). Detailed operations of S1201, S1207 and S1209 may be based on [Method #4].

Referring to FIG. 13, the BS may transmit an SIB to inform the UE whether the UE should perform LBT when transmitting a UL channel (S1301). Further, the BS may transmit DCI or an RAR which schedules the UL channel (e.g., PUSCH/PUCCH) to the UE (S1303). The UE may interpret bits included in the DCI or the RAR based on whether to perform LBT as indicated by the SIB, and transmit the UL channel (e.g., PUSCH/PUCCH) to the BS based on information of the interpreted bits (S1305). A specific method of performing S1301 to S1305 may be based on at least one of [Method #1], [Method #2], [Method #3], or [Method #5]. For example, when the specific method is based on at least one of [Method #1], [Method #2], or [Method #3], the UL channel may be a DG-PUSCH, an Msg 3. PUSCH, or an Msg A. PUSCH. Further, when the specific method is based on [Method #5], step S1303 may be skipped, and the UE may transmit the UL channel to the BS based on whether to perform LBT as indicated by the SIB.

After step S1301, the BS may transmit a parameter csi-RS-ValidationWith-DCI to the UE (S1307). However, S1307 may be skipped based on the transmitted SIB. The BS may transmit a periodic/semi-persistent CSI-RS to the UE based on the transmitted SIB (S1309). Detailed operations of S1301, S1307, and S1309 may be based on [Method #4].

[Method #1] Method of configuring and interpreting a field for indicating an LBT type, transmitted in fallback DCI (e.g., DCI format 1_0 and/or an RAR UL grant or successRAR of 2-step RACH), when the BS sets the LBT mode to ON or OFF for the UE through an SIB, and method of determining an LBT type to be applied by the UE prior to a UL channel transmission

When the LBT mode is set to ON for the UE (e.g., when an SIB includes a parameter corresponding to the LBT mode), the UE may interpret fallback DCI (e.g., DCI format 1_0 and/or an RAR UL grant or successRAR of the 2-step RACH), assuming that there is a 1-bit or 2-bit LBT type indication field in the fallback DCI (e.g., DCI format 1_0 and/or the RAR UL grant or successRAR of the 2-step RACH) according to any one of [Method #1-1] to [Method #1-5] below.

For example, the UE may always interpret one bit of the CSI request field as the LBT type indication field in the RAR UL grant. For example, the UE may interpret that Cat-1 LBT or Cat-3 LBT is indicated according to the value of the 1-bit field, and apply the indicated LBT type to a UL channel transmission. Alternatively, the UE may interpret two LSBs or two MSBs of the PUSCH frequency resource allocation field as the LBT type indication field in the RAR UL grant. For example, the UE may interpret that one of Cat-1 LBT, Cat-2 LBT, and Cat-3 LBT is indicated based on the value of the 2-bit field, and apply the indicated LBT type to the UL channel transmission.

[Method #1-1] One reserved bit of the RAR may be used to indicate one of two LBT types (e.g., Cat-1 LBT and Cat-3 LBT).

[Method #1-2] Since the CSI request field of the RAR UL grant is reserved in the contention-based RACH procedure, one of two LBT types (e.g., Cat-1 LBT and Cat-3 LBT) may be indicated by one bit of the CSI request field in the contention-based RACH procedure.

(1) Since the CSI request field is used in the non-contention-based RACH procedure (e.g., contention-free RACH procedure), it may be configured to use a different proposed method (e.g., one of [Method #1-1] and [Method #1-3] to [Method #1-5]) in the non-contention-based RACH procedure. Alternatively, it may be defined or preset in a standard document that one of Cat-1 LBT, Cat-2 LBT, and Cat-3 LBT is always assumed in the non-contention-based RACH procedure.

(2) Characteristically, one bit of the CSI request field may always be used as the LBT type indication field, regardless of the contention-based RACH procedure or the non-contention-based RACH procedure.

For example, in the shared spectrum band of 52.6GHz to 71GHz, the RAR UL grant may include the LBT type indication field, instead of the CSI request field.

[Methods #1-3] An LBT type may be indicated by L MSBs or LSBs of a specific field.

(1) An LBT type may be indicated by L MSBs or LSBs of the frequency resource allocation field.

1) For example, one of two LBT types (e.g., Cat-1 LBT and Cat-3 LBT) may be indicated by one MBS of the PUSCH frequency resource allocation field.
2) In another example, when an LBT type is indicated by two MSBs or LSBs of the PUSCH frequency resource allocation field, one of three LBT types (e.g., Cat-1 LBT/Cat-2 LBT/Cat-3 LBT) may be indicated.

3) Characteristically, the UE, which actually interprets the PUSCH frequency resource allocation field, may interpret PUSCH frequency resource allocation information, assuming that L MSBs or LSBs of the PUSCH frequency resource allocation field used to indicate an LBT type is zero.

[Methods #1-4] The size of a specific field may be reduced by L bits, and the reduced L bits may be used to form a field indicating an LBT type.

(1) The PUSCH frequency resource allocation field, which is 14 bits in a licensed band, may be configured to be 13 bits. Further, the remaining one bit may be configured as a field indicating two LBT types (e.g., Cat-1 LBT and Cat-3 LBT). For example, one MSB of the PUSCH frequency resource allocation field may be used to indicate one of two LBT types (e.g., Cat-1 LBT and Cat-3 LBT).

(2) In another example, the PUSCH frequency resource allocation field, which is 14 bits in a licensed band, may be configured to be fewer bits (e.g., 12 bits) than 13. Further, the remaining bits (e.g., two bits) may be configured as a field indicating an LBT type.

For example, when an LBT type is indicated using two MSBs or LSBs of the PUSCH frequency resource allocation field, one of Cat-1 LBT, Cat-2 LBT, and Cat-3 LBT may be indicated.

(3) Characteristically, the UE may interpret the PUSCH frequency resource allocation information, assuming zero as the value of as many MSBs or LSBs as the number of bits by which the PUSCH frequency resource allocation field having 14 bits in the licensed band is reduced.

For example, when PUSCH frequency resource allocation is performed using 12 bits, the UE may understand the PUSCH frequency resource allocation information, assuming that one MSB or LSB is zero. This is because a maximum of 13 bits are required for PUSCH frequency resource allocation by a resource indicator value (RIV), and thus one MSB or LSB (13-12=1 bit) only needs to be processed as zero.

[Method #1-5] An LBT type indication field may be configured in a combination of at least one of [Method #1-1] to [Method #1-4], to indicate an LBT type.

That is, an LBT type may be indicated by a combination of one reserved bit of the RAR, one bit of the CSI request field of the RAR UL grant, a field of the RAR UL grant, which is not required in NR-U, and/or L MSBs or LSBs of a specific field.

When the LBT mode is set to OFF for the UE (e.g., when the SIB does not include the parameter corresponding to the LBT mode), there is no need to indicate an LBT type because the UE does not need to perform LBT before a UL transmission and there is no COT sharing. Therefore, the RAR UL grant may be configured in the same manner as for a conventional licensed band.

For example, when the UE identifies that the SIB does not include the parameter corresponding to the LBT mode, the UE recognizes that a UL transmission is possible without LBT in the band of 52.6 GHz to 71 GHz. Further, upon receipt of fallback DCI or an RAR UL grant, the UE may decode the fallback DCI or the RAR UL grant, considering that the LBT type indication field in the fallback DCI or RAR UL grant is 0 bits. That is, when the UE identifies that the SIB does not include the parameter corresponding to the LBT mode, the UE may perform decoding, considering that the LBT type indication field is not present in the fallback DCI or the RAR UL grant.

Therefore, according to [Method #1], an LBT type may be indicated, while the total number of bits included in the fallback DCI or the RAR UL grant always remains the same. That is, there may be no need for an additional bit for indicating an LBT type in the fallback DCI or the RAR UL grant. Further, the sum of the number of bits in a specific bit field and the number of bits in the LBT type indication field in the case of LBT mode=ON may be the same as the number of bits in the specific bit field in the case of LBT mode=OFF. For example, according to [Method #1-3] and [Method #1-4], when the LBT mode is ON, the sum of the number of bits in the PUSCH frequency resource allocation field and the number of bits in the LBT type indication field is 14, which may be equal to the number (i.e., 14) of bits in the PUSCH frequency resource allocation field, when the LBT mode is OFF.

Further, according to [Method #1-2], when the LBT mode is ON, the CSI request field may be absent, and the LBT type indication field may be generated instead. On the contrary, when the LBT mode is OFF, the LBT type indication field may be absent, and the CSI request field may be generated instead.

[Method #2] Method of interpreting the PUSCH frequency resource allocation field, when the number of bits (i.e., field width) of the PUSCH frequency resource allocation field in the RAR UL grant is changed according to the size of the LBT type indication field.

When an LBT type for an Msg. 3 transmission needs to be indicated by the BS, as in an operation for shared spectrum channel access, the number of bits of the PUSCH frequency resource allocation field in the RAR may be reduced as in [Method #1], and an explicit 1-bit field may be used to indicate an LBT type (e.g., a ChannelAccess-CPext field in NR-U.) That is, the sizes of content fields in the RAR UL grant may be redefined, as illustrated in [Table 10] below.

Table 10

| RAR UL grant field | Number of bits |
|---|---|
| Frequency hopping flag | 1 |
| PUSCH frequency resource allocation | 14, for operation without shared spectrum channel access13, for operation with shared spectrum channel access in frequency range 2-2 <br><br> 12, for operation with shared spectrum channel access in frequency ranqe 1 |
| PUSCH time resource allocation | 4 |
| MCS | 4 |
| TPC command for PUSCH | 3 |
| CSI request | 1 |
| ChannelAccess | 0, for operation without shared spectrum channel access1, for operation with shared spectrum channel access in frequency range 2-2 <br><br> 2, for operation with shared spectrum channel access in frequency ranqe 1 |

When the size of the PUSCH frequency resource allocation field (e.g., a field indicating frequency resource allocation corresponding to $N_{BWP}^{size}$) is 13 because an LBT type for an Msg. 3 transmission needs to be indicated by the BS, the contents of [Table 11] describing truncation/padding of the PUSCH frequency resource allocation field in the current standard document 3GPP TS 38.213 may not be sufficient.

Table 11

- if $N_{BWP}^{size} \leq 180$, or for operation with shared spectrum channel access if $N_{BWP}^{size} \leq 90$

- truncate the frequency domain resource assignment field to its $\lceil \log_2(N_{BWP}^{size} \cdot (N_{BWP}^{size} + 1)/2) \rceil$ least signif-icant bits and interpret the truncated frequency resource assignment field as for the frequency resource assignment field in DCI format 0_0 as described in [5, TS 38.212]

- else

- insert $\lceil \log_2(N_{BWP}^{size} \cdot (N_{BWP}^{size} + 1)/2) \rceil - 14$ most significant bits, or for operation with shared spectrum channel access insert $\lceil \log_2(N_{BWP}^{size} \cdot (N_{BWP}^{size} + 1)/2) \rceil - 12$ most significant bits, with value set to '0' after the $N_{UL,hop}$ bits to the frequency domain resource assignment field, where $N_{UL,hop}$ = 0 if the frequency hopping flag is set to '0' and $N_{UL,hop}$ is provided in Table 8.3-1 if the hopping flag bit is set to '1', and interpret the expanded frequency resource assignment field as for the frequency resource assignment field in DCI format 0_0 as described in [5, TS 38.212]

- end if

Therefore, the part of 3GPP TS 38.213 corresponding to [Table 11] may be modified based on the following ideas.

(1) Legacy NR without shared spectrum channel access

1) When the number of PRBs in a BWP is equal to or less than 180,

the PUSCH frequency resource allocation field may be truncated by its $\lceil \log_2(N_{BWP}^{size} \cdot (N_{BWP}^{size} + 1)/2) \rceil LSBs$, and the truncated PUSCH frequency resource allocation field may be interpreted in the same manner as the PUSCH frequency resource allocation field in DCI format 0_0.
2) When the number of PRBs in the BWP is greater than 180,

as many zeroes as $\left\lceil \log_2\left(N_{\text{BWP}}^{\text{size}} \cdot (N_{\text{BWP}}^{\text{size}} + 1)/2\right)\right\rceil - 14$ MSBs may be padded before the PUSCH frequency resource allocation field, and the extended PUSCH frequency resource allocation field may be interpreted in the same manner as the PUSCH frequency resource allocation field in DCI format 0_0. In this case, when the frequency hopping flag is 0, $N_{\text{UL,hop}}=0$, and when the frequency hopping flag is 1, $N_{\text{UL,hop}}$ follows [Table 12] (Table. 8.3-1 in 3GPP TS 38.213).

Table 12]

| Number of PRBs in initial UL BWP | Value of $N_{\text{UL,hop}}$ Hopping Bits | Frequency offset for 2nd hop |
|---|---|---|
| $N_{\text{BWP}}^{\text{size}} < 50$ | 0 | $\left\lfloor N_{\text{BWP}}^{\text{size}} /2 \right\rfloor$ |
| | 1 | $\left\lfloor N_{\text{BWP}}^{\text{size}} /4 \right\rfloor$ |
| $N_{\text{BWP}}^{\text{size}} \geq 50$ | 00 | $\left\lfloor N_{\text{BWP}}^{\text{size}} /2 \right\rfloor$ |
| | 01 | $\left\lfloor N_{\text{BWP}}^{\text{size}} /4 \right\rfloor$ |
| | 10 | $-\left\lfloor N_{\text{BWP}}^{\text{size}} /4 \right\rfloor$ |
| | 11 | Reserved |

(2) Rel-16 NR-U with shared spectrum channel access

1) When the number of PRBs in the BWP is equal to or less than 90, the PUSCH frequency resource allocation field may be truncated by its $\left\lceil \log_2\left(N_{\text{BWP}}^{\text{size}} * (N_{\text{BWP}}^{\text{size}} + 1)/2\right)\right\rceil$ LSBs, and the truncated PUSCH frequency resource allocation field may be interpreted in the same manner as the PUSCH frequency resource allocation field in DCI format 0_0.

2) When the number of PRBs in the BWP is greater than 90, as many zeroes as $\left\lceil \log_2\left(N_{\text{BWP}}^{\text{size}} * (N_{\text{BWP}}^{\text{size}} + 1)/2\right)\right\rceil - 12$ MSBs of the PUSCH frequency resource allocation field may be padded before the PUSCH frequency resource allocation field, and the extended PUSCH frequency resource allocation field may be interpreted in the same manner as the PUSCH frequency resource allocation field in DCI format 0_0. In this case, when the frequency hopping flag is 0, $N_{\text{UL,hop}}=0$, and when the frequency hopping flag is 1, $N_{\text{UL,hop}}$ follows [Table 11] (Table. 8.3-1 in 3GPP TS 38.213).

(3) B52 NR system operation with shared spectrum channel access in FR 2-2 (i.e., NR system operation in band of 52.6GHz or higher)

1) When the number of PRBs in the BWP is equal to or less than 127, the PUSCH frequency resource allocation field may be truncated by its $\left\lceil \log_2\left(N_{\text{BWP}}^{\text{size}} * (N_{\text{BWP}}^{\text{size}} + 1)/2\right)\right\rceil$ LSBs, and the truncated PUSCH frequency resource allocation field may be interpreted in the same manner as the PUSCH frequency resource allocation field in DCI format 0_0.

2) When the number of PRBs in the BWP is greater than 127, as many zeroes as $\left\lceil \log_2\left(N_{\text{BWP}}^{\text{size}} * (N_{\text{BWP}}^{\text{size}} + 1)/2\right)\right\rceil - 13$ MSBs may be padded before the PUSCH frequency resource allocation field, and the extended PUSCH frequency resource allocation field may be interpreted in the same manner as the PUSCH frequency resource allocation field in DCI format 0_0. In this case, when the frequency hopping flag is 0, $N_{\text{UL,hop}}=0$, and when the frequency hopping flag is 1, $N_{\text{UL,hop}}$ follows [Table 11] (Table. 8.3-1 in 3GPP TS 38.213).

3) A new threshold value (e.g., 127) means a maximum number of PRBs in the BWP, which may be indicated in 13 bits when PUSCH frequency resources are indicated in the manner of UL resource allocation type 1 (e.g., a resource indicator value (RIV)) (e.g., 127*128/2 = 8128≤8192 = $2^{13}$).

Based on the above ideas, the standard document 3GPP TS 38.213 may be modified as illustrated in [Table 13] below.

[Table 13]

| |
|---|
| - if $N_{BWP}^{size} \leq 180$, or for operation with shared spectrum channel access <u>in frequency range 1 if</u> $N_{BWP}^{size} \leq 90$, <u>or for operation with shared spectrum channel access in frequency range 2-2 if</u> $\underline{N_{BWP}^{size} \leq 127}$ <br><br> - truncate the frequency domain resource assignment field to its $\left\lceil \log_2\left(N_{BWP}^{size} \cdot \left(N_{BWP}^{size} + 1\right)/2\right)\right\rceil$ least significant bits and interpret the truncated frequency resource assignment field as for the frequency resource assignment field in DCI format 0_0 as described in [5, TS 38.212] <br><br> - else <br><br> - insert $\left\lceil \log_2\left(N_{BWP}^{size} \cdot \left(N_{BWP}^{size} + 1\right)/2\right)\right\rceil - 14$ most significant bits, or for operation with shared spectrum channel access <u>in frequency range 1</u> insert $\left\lceil \log_2\left(N_{BWP}^{size} \cdot \left(N_{BWP}^{size} + 1\right)/2\right)\right\rceil - 12$ most significant bits, <u>or for operation with shared spectrum channel access in frequency range 2-2 insert</u> $\left\lceil \log_2\left(N_{BWP}^{size} \cdot \left(N_{BWP}^{size} + 1\right)/2\right)\right\rceil - 13$ <u>most significant bits</u>, with value set to '0' after the $N_{UL,hop}$ bits to the frequency domain resource assignment field, where $N_{UL,hop}$ = 0 if the frequency hopping flag is set to '0' and $N_{UL,hop}$ is provided in Table 8.3-1 if the hopping flag bit is set to '1', and interpret the expanded frequency resource assignment field as for the frequency resource assignment field in DCI format 0_0 as described in [5, TS 38.212] <br><br> - end if |

[Method #3] Method of interpreting an indicated bit value by mapping it to a specific state or index in an LBT type mother table defined in the standard, according to the size (i.e. bit width) of an LBT type indication field in fallback DCI (e.g. DCI format 0_0 and DCI format 1_0).

[Method #3-1] When the LBT type indication field is 2 bits: each value of the 2-bit field may be interpreted by mapping it to one of four indexes in the LBT type mother table.

[Method #3-2] When the LBT type indication field is 1 bit: among the four states in the LBT type mother table, pre-agreed (i.e., defined in the standard) or preconfigured two states are selected or interpreted, and each value of the 1-bit field may be mapped to one of two indexes corresponding to the two states and interpreted accordingly.

[Method #3-3] When the LBT type indication field is 0 bits:

(1) The UE may perform a transmission without LBT, always assuming no-LBT.
(2) The UE may operate, assuming Cat-3 LBT as a default LBT type, and when a COT sharing condition is satisfied, switch to Cat-1 LBT or Cat-2 LBT and perform a UL transmission.

Table 14

| Bit field mapped to index | Channel Access Type | The CP extension T_"ext" index defined in Clause 5.3.1 of [4, TS 38.211] |
|---|---|---|
| 0 | Type2C-ULChannelAccess defined in [clause 4.2.1.2.3 in 37.213] | 2 |
| 1 | Type2A-ULChannelAccess defined in [clause 4.2.1.2.1 in 37.213] | 3 |
| 2 | Type2A-ULChannelAccess defined in [clause 4.2.1.2.1 in 37.213] | 1 |
| 3 | Type1-ULChannelAccess defined in [clause 4.2.1.1 in 37.213] | 0 |

[Table 14] illustrates Table 7.3.1.1.1.1-4 in 3GPP TS 38.212. As illustrated in [Table 13], combinations of LBT types (i.e. channel access types) and CP extensions to be applied when ChannelAccess-CPext including two bits is indicated in fallback DCI (e.g. DCI format 0_0 or DCI format 1_0) in Rel-16 NR-U are defined as four states in the mother table. In Rel-16 NR-U, because the ChannelAccess-CPext field in the fallback DCI is always fixed to 2 bits, when the value of the bits is indicated as one of 00, 01, 10, and 11, it is mapped to an index corresponding to a corresponding state, and thus an LBT type and a CP extension to be applied to LBT may be selected.

However, in an NR system operating in 52.6GHz to 71GHz (e.g., FR 2-2) (hereinafter, referred to as a B52 system), Cat-2 LBT corresponding to Type 2A CAP is not required necessarily, and may be supported optionally depending on a country/region and UE capabilities. In non-fallback DCI (e.g., DCI format 0_1 and DCI format 1_1), the LBT type indication field is always 2 bits, and a total of four states, Cat-1 LBT/Cat-2 LBT/Cat-3 LBT and one reserved state may be defined in an LBT type mother table for a band above of 52.6GHz or higher for the 2 bits.

However, because Cat-2 LBT is optional in the case of fallback DCI, one of Cat-1 LBT and Cat-3 LBT may be indicated by 1 bit. When the LBT type indication field is 0 bits, the UE may operate, always assuming Cat-3 LBT as a default LBT type unless otherwise specified. However, when the COT sharing condition is satisfied, the UE may operate based on Cat-1 LBT or Cat-2 LBT.

Alternatively, when the LBT mode is set to OFF by SIB1, the LBT type indication is not required because the UE does not need to perform LBT prior to a transmission. Therefore, the LBT type indication field in the fallback DCI may be 0 bits, and the UE may always operate based on no LBT (e.g., Type 3 CAP or Cat-1 LBT). Alternatively, even if the fallback DCI includes 1 or 2 (reserved) bits corresponding to the LBT type indication field, the UE may ignore the field and always operate based on no LBT (e.g., Type 3 CAP or Cat-1 LBT).

Accordingly, for a band of 52.6GHz or higher, an LBT type mother table for indicating an LBT type, which includes four states without fallback/non-fallback distinction, may be defined in the standard. In this case, to indicate the LBT type mother table including the four states by one bit instead of two bits, only two specific states out of the four states in the mother table need to be agreed/configured for use.

For example, it may be defined in the standard that two states from the lowest state or the highest state in the LBT type mother table including the four states are used, or two states to be used may be preconfigured by the BS, so that an LBT type may be indicated by only one bit. In another example, a new table may be defined for a 1-bit LBT type indication by specifying specific two states in the LBT type mother table including the four states.

[Method #4] Method of operating based on the assumption that the LBT mode of the UE is always identical to the LBT mode of the BS, depending on whether LBT mode=ON/OFF is configured through SIB1 by the BS, and when LBT mode=OFF is configured, receiving a periodic CSI-RS or a semi-persistent CSI-RS by interpreting a parameter csi-RS-ValidationWith-DCI as follows, and operating accordingly by the UE.

[Method #4-1] When LBT mode=OFF is configured, the UE may receive a periodic CSI-RS or a semi-persistent CSI-RS as in a licensed band or perform an operation as in Rel-16, regardless of a configuration for DCI 2_0 or the parameter csi-RS-ValidationWith-DCI.

[Method #4-2] When LBT mode=OFF is configrued, the UE may not expect the parameter csi-RS-ValidationWith-DCI to be set.

The BS may indicate to the UE through SIB1 whether a cell to which the UE is connected operates in LBT mode (i.e., LBT mode=ON) or no-LBT mode (i.e., LBT mode=OFF). The BS may operate in a different LBT mode from that of the UE regardless of the LBT mode configured for the UE. For example, even if the BS has configured LBT mode=OFF for the UE, the BS may still perform LBT before a transmission. However, when the BS always operates in the same LBT mode as the LBT mode configured for the UE, the UE may have a gain in performing CSI-RS validation.

For example, according to the standard document 3GPP TS 38.213, when the parameter csi-RS-ValidationWith-DCI is configured for the UE, and a parameter indicating a COT duration (e.g., a slot format indicator (SFI) field and a CO-duration field) is not configured for DCI format 2_0, the UE receives a periodic/semi-persistent-CSI-RS (P/SP-CSI-RS) only when a corresponding P/SP-CSI-RS resource is included in an aperiodic CSI-RS (AP-CSI-RS) or a PDSCH, and otherwise, the UE should cancel the P/SP-CSI-RS reception. The requirement that the P/SP-CSI-RS resource be included in an AP-CSI-RS or a PDSCH may mean that the P/SP-CSI-RS resource should be included in time resources in which the AP-CSI-RS or the PDSCH is scheduled.

In another example, when the parameter csi-RS-ValidationWith-DCI is not configured and the parameter indicating a COT duration is not configured for DCI format 2_0, the UE may operate in the same manner as in a licensed band. For example, the UE may operate based on 3GPP TS 38.213 sections 11 and 11.1. This may be thought of as the UE implicitly believing that the BS will not fail to transmit the P/SP-CSI-RS because the BS is successful in LBT.

Accordingly, referring to the above example, when the BS and the UE always operate in the same mode, the UE may not expect the parameter csi-RS-ValidationWith-DCI to be configured, when the UE is configured with LBT mode=OFF.

Further, regardless of whether the parameter csi-RS-ValidationWith-DCI is configured, when the UE is configured with LBT mode=OFF, and the parameter indicating a COT duration is not configured for DCI format 2_0, the UE may operate in the same manner as in a licensed band, for P/SP-CSI-RS reception. Alternatively, once LBT mode=OFF is configured, the UE may operate in the same manner as in the licensed band, for P/SP-CSI-RS reception.

[Method #5] Method of determining the LBT type of a UL signal/channel, such as a P/SP PUCCH/SRS or a configured granted-PUSCH (CG-PUSCH), which is not indicated by DCI according to whether the BS configures LBT mode=ON or LBT mode=OFF for the UE, or regardless of the LBT mode configuration.

[Method #5-1] When LBT mode=ON is configured: the UE operates, always assuming Cat-3 LBT as a default LBT type for the P/SP PUCCH/SRS and/or the CG-PUSCH before a transmission, and when it is identified that COT sharing is allowed, the UE may be allowed to perform no-LBT transmission.

[Method #5-2] When LBT mode=OFF is configured (or the LBT mode parameter is not enabled): no-LBT transmission may always be allowed for the P/SP PUCCH/SRS and/or the CG-PUSCH.

[Method #5-3] For the P/SP PUCCH/SRS and/or the CG-PUSCH regardless of whether LBT mode=ON/OFF, the UE operates, always assuming Cat-3 LBT as a default LBT type before a transmission, and when it is identified that COT sharing is allowed, the UE may be allowed to perform no-LBT transmission.

In the high-frequency unlicensed band of 52GHz or higher, the BS or the UE may perform specific beam direction LBT or beam group-based LBT (directional LBT) in addition to omni-directional LBT as a CAP and transmit a DL or UL signal/channel. For a COT acquired after performing specific beam direction LBT, it may be preferable to allow a transmission after Cat-2 LBT only between a DL and a UL that have a correlation (e.g., QCL relationship) with the beam direction in which the LBT was performed, unlike a COT acquired after omni-directional LBT, and to allow a transmission after random backoff-based LBT (e.g., Cat-3 LBT or Cat-4 LBT) for other signals/channels.

Further, the BS or the UE, which shares a COT, may perform Cat-2 LBT within the COT, omni-directionally or in a beam direction having a QCL relationship with a beam direction used to acquire the COT. Further, within a COT acquired by performing LBT in a specific beam direction, relatively narrow beams included in a corresponding sensing beam may be transmitted. For example, in a COT acquired by performing LBT using beam A having a relatively large beam width as a sensing beam, relatively narrow beams A1 and A2 included in an area covered by beam A may be transmitted.

A method of sharing a COT acquired by performing directional LBT and a method of performing LBT within the COT will be described below through [Method #6].

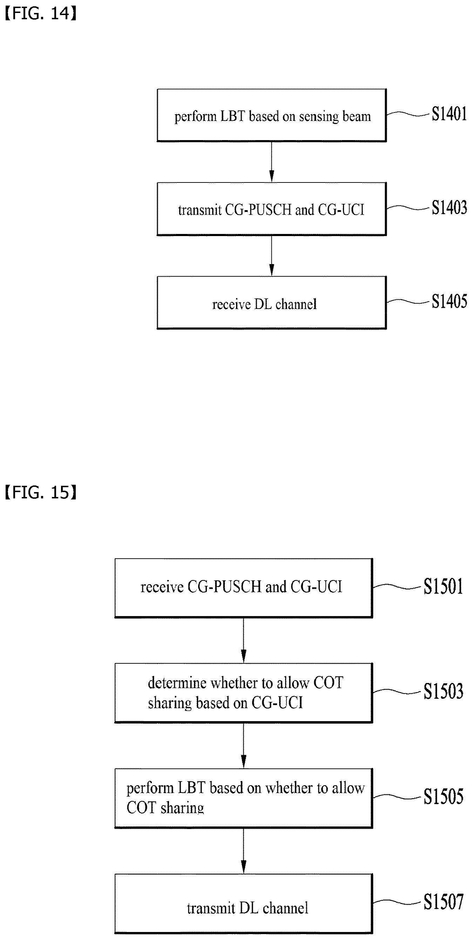

FIGS. 14 to 16 are diagrams illustrating an overall process of operating a UE and a BS according to [Method #6].

Referring to FIG. 14, the UE may perform LBT based on a sensing beam (S1401). Further, when the LBT is successful, the UE may transmit a CG-PUSCH and configured grant-uplink control information (CG-UCI) (S1403). The CG-UCI may include information about whether the UE has performed the LBT with a sensing beam indicated by the BS or with another sensing beam. The UE may receive a DL channel from the BS (S1405).

Specific operations of the UE corresponding to S1401 to S1405 may be based on [Method #6].

Referring to FIG. 15, the BS may receive a CG-PUSCH and CG-UCI (S1501). Based on information included in the CG-UCI (i.e., information about whether the UE has performed LBT through a sensing beam indicated by the BS or through another sensing beam), the BS may determine whether to allow sharing of a COT acquired by the UE (S1503).

Based on the determination as to whether to allow COT sharing, the BS may transmit a DL channel by performing LBT (S1505 to S1507).

Specific operations of the BS corresponding to S1501 to S1507 may be based on [Method #6].

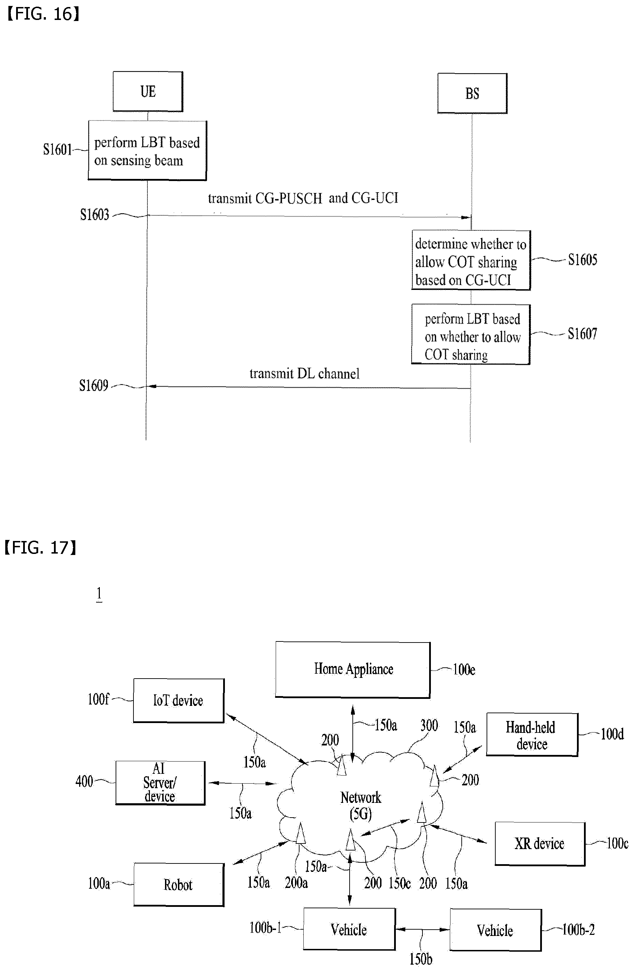

Referring to FIG. 16, the UE may perform LBT based on a sensing beam (S1601). Further, when the LBT is successful, the UE may transmit a CG-PUSCH and CG-UCI to the BS (S1603). The CG-UCI may include information about whether the UE has performed the LBT with a sensing beam indicated by the BS or with another sensing beam. Based on the received information, the BS may determine whether to allow sharing of a COT acquired by the UE (S1605).

Based on the determination as to whether to allow COT sharing, the BS may transmit a DL channel by performing LBT (S1607 to S1609).

Specific operations of the UE and the BS corresponding to S1601 to S1609 may be based on [Method #6].

[Method #6] COT sharing method and method of performing LBT within a COT, when the COT, which the UE has acquired by performing random backoff-based LBT (e.g., Cat-3 LBT or Cat-4 LBT) in a specific beam direction or on a beam group basis, is shared with the BS.

[Method #6-1] In the case of a CG-PUSCH, the UE may transmit, in a specific field of CG-UCI, information related to whether LBT has been performed through a sensing beam configured/indicated by the BS or through another sensing beam (e.g., omni-beam) covering a Tx beam corresponding to the CG-PUSCH. For example, the UE may transmit, to the BS, 1-bit information indicating whether LBT has been performed through the configured/indicated sensing beam by including the 1-bit information in the CG-UCI.

(1) The BS may receive information about a sensing beam that the UE has used for a CG-PUSCH transmission through CG-UCI and determine whether a COT of the UE is sharable for a DL transmission. The BS may then determine an LBT type to be used for the DL transmission (e.g., whether to perform Cat-2 LBT, or random backoff-based Cat-3 LBT or Cat-4 LBT).

(2) Characteristically, when the CG-UCI does not have a field for including the information about the sensing beam used by the UE, or when no information about the sensing beam is configured, the BS may be configured to always use a pre-agreed/preconfigured sensing beam (e.g., omni-beam), and determine an LBT type to be used for COT sharing and the DL transmission based on the pre-agreed/preconfigured sensing beam.

(3) When the UE indicates through the CG-UCI that it has performed LBT using another sensing beam (e.g., omni-beam) covering the Tx beam used for the CG-PUSCH transmission, other than the preconfigured/indicated sensing beam, the BS may perform Cat-2 LBT by sharing the COT of the UE, and when Cat-2 LBT is successful, perform a non-unicast transmission (e.g., a transmission without user plane data) to another UE.

However, the maximum duration of the non-unicast transmission from the BS may be limited, and the limit may be a preset/indicated value or a value defined in a standard. For example, even if there is a remainder of an MCOT acquired by the UE, the BS may have to perform the non-unicast transmission only during a time period equal to or shorter than the limit.

In [Method #6], a beam group in which each beam is included may be preconfigured. Further, a beam group may include one or more beams. When an omni-directional beam is included in a specific beam group, LBT performed through the beam or the specific beam group may be omni-directional LBT. Omni-directional beams may refer to a set of beams covering a specific sector in a cell.

The BS may acquire a COT by performing Cat-4 LBT in a specific beam direction or based on a specific beam group. Further, the BS may transmit a DL signal/channel by configuring a Tx burst in the specific beam direction or a specific beam group direction, and transfer the remaining COT to the UE so that the UE may transmit a UL signal/channel. Likewise, when the BS shares a COT that the UE has acquired through LBT in a specific beam direction or based on a specific beam group, and uses the COT in a DL transmission, the BS may perform the DL transmission by performing Cat-2 LBT instead of random backoff-based LBT (e.g., (e.g., Cat-3 LBT or Cat-4 LBT).

In the high-frequency unlicensed band, transmission/reception only in a specific beam direction may be considered to overcome large path loss, as described before. Accordingly, LBT may be performed only in the specific beam direction intended for a transmission, rather than omni-directionally. Therefore, it may be preferable that a COT that the BS or the UE acquires by performing directional LBT in a specific beam direction is shared only between spatially related DL and UL transmissions (e.g., DL and UL transmissions in the QCL relationship). Accordingly, it may be necessary for the BS to provide information about a sensing beam used to acquire a COT through DCI format 2_0 in DL, and for the UE to provide information about a sensing beam used to acquire a COT through CG-UCI in UL.

When the BS configures a CG-PUSCH transmission for the UE, a Type 1 CG resource configuration may be configured by RRC signaling, and a Type 2 CG resource configuration may be configured by RRC signaling and activation DCI. For example, for the Type 1 CG resource configuration, the BS may configure/indicate information about a UL beam to be used for the CG-PUSCH transmission for/to the UE by RRC signaling. For the Type 2 CG resource configuration, the BS may configure/indicate information about a UL beam to be used for the CG-PUSCH transmission for/to the UE by activation DCI. In this case, an SRI may be included in the activation DCI to indicate/configure the information about the UL beam.

Before transmitting the CG-PUSCH through the configured/indicated UL beam, the UE may perform LBT through a sensing beam covering the UL beam, and when the LBT is successful, acquire a COT. Further, the UE may perform LBT using the same beam (e.g., a beam corresponding to the same spatial filter) corresponding to a Tx beam (i.e., the UL beam) as the sensing beam. Alternatively, the UE may perform LBT using another sensing beam (e.g., omni-beam) covering the UL beam according to beam correspondence (BC) capabilities.

Accordingly, the UE may acquire a COT by performing LBT using a specific sensing beam for the CG_PUSCH transmission. Further, to determine whether the acquired COT is sharable for a DL transmission of the BS, the UE may need to indicate the sensing beam used for the COT acquisition through a specific field of CG-UCI which is always multiplexed with the CG-PUSCH when the CG-PUSCH is transmitted.

Upon receipt of information about the sensing beam that the UE has used for the CG-PUSCH transmission through the CG-UCI, the BS may determine whether the COT of the UE is sharable for the DL transmission, and then determine an LBT type (e.g., Cat-2 LBT, or random backoff-based Cat-3 LBT or Cat-4 LBT) to be used for the DL transmission.

Characteristically, when the CG-UCI does not have a field for including the information about the sensing beam used by the UE, or the information about the sensing beam is not configured, the BS may be configured to always use a pre-agreed/preconfigured sensing beam (e.g., omni-beam), and determine whether to share the COT and the LBT type to be used for the DL transmission according to the pre-agreed/preconfigured sensing beam.

For example, when a Tx beam to be transmitted for the DL transmission is directed in a direction associated with the sensing beam that the UE has used to acquire the COT, based on information about a beam direction (i.e., the direction of the sensing beam) in the CG-UCI transmitted by the UE, the BS may perform Cat-2 LBT other than random backoff-based LBT (e.g., Cat-3 LBT or Cat-4 LBT), in the corresponding beam direction, and then transmit a DL signal/channel associated on the spatial domain in the UE-initiated COT. When the DL transmission is directed in a direction not associated with the sensing beam that the UE has used to acquire the COT, the BS may always perform the DL transmission, only when it succeeds in random backoff-based LBT (e.g., Cat-3 LBT or Cat-4 LBT).

When the UE indicates through the CG-UCI that the UE has performed LBT using another sensing beam (e.g., omni-beam) covering the Tx beam, other than the preconfigured/indicated sensing beam, the BS may perform Cat-2 LBT by sharing the COT of the UE, and when the Cat-2 LBT is successful, perform a non-unicast transmission (e.g., a transmission without user plane data) to another UE.

However, the maximum duration of the non-unicast transmission from the BS may be limited, and the limit may be preconfigured/indicated value or a value defined in the standard. For example, even if there is a remainder of an MCOT acquired by the UE, the BS may have to perform the non-unicast transmission only during a time period equal to or shorter than the limit.

The disclosure may be used for direct communication between UEs as well as for UL and/or DL, and the proposed methods may be used in a BS or a relay node.

It will be appreciated that any of examples of the above-described proposed methods may also be included as one of the embodiments and thus considered to be a kind of proposed method. Further, the above-described proposed methods may be implemented independently, and some of them may also be implemented as a combination (or merged). It may be regulated that the BS indicates to the UE whether to apply the proposed methods (or information about rules for the proposed methods) through a predefined signal (e.g., a physical-layer signal or a higher-layer signal).

The various descriptions, functions, procedures, proposals, methods, and/or operation flowcharts of the disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 17 illustrates a communication system 1 applied to the disclosure.

Referring to FIG. 17, the communication system 1 applied to the disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g. relay or integrated access backhaul(IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the disclosure.

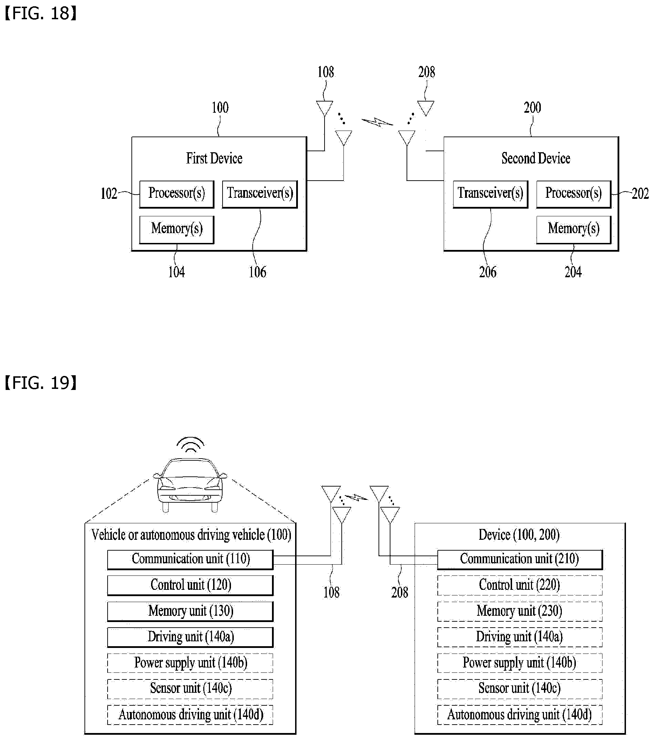

FIG. 18 illustrates wireless devices applicable to the disclosure.

Referring to FIG. 18, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the disclosure, the wireless device may be a communication modem/circuit/chip.

Specifically, instructions and/or operations, controlled by the processor 102 of the first wireless device 100 and stored in the memory 104 of the first wireless device 100, according to an Embodiment of the disclosure will be described.

Although the following operations will be described based on a control operation of the processor 102 in terms of the processor 102, software code for performing such an operation may be stored in the memory 104. For example, in the disclosure, the at least one memory 104 may be a computer-readable storage medium and may store instructions or programs. The instructions or programs may cause, when executed, the at least one processor operably connected to the at least one memory to perform operations according to Embodiments or implementations of the disclosure, related to the following operations.

For example, the processor 102 may receive an SIB indicating whether LBT should be performed for a UL channel transmission through the transceiver 106. Further, the processor 102 may receive DCI or an RAR, which schedules a UL channel (e.g., PUSCH/PUCCH) through the transceiver 106. The processor may interpret bits included in the DCI or RAR based on whether to perform LBT as indicated by the SIB, and transmit the UL channel (e.g., PUSCH/PUCCH) based on information of the interpreted bits through the transceiver 106. A specific method of performing the above-described operation of the processor 102 may be based on at least one of [Method #1], [Method #2], [Method #3], or [Method #5]. For example, when the specific method is based on at least one of [Method #1], [Method #2], or [Method #3], the UL channel may be a DG-PUSCH, an Msg 3. PUSCH, or an Msg A. PUSCH. Further, when the specific method is based on [Method #5], the step of receiving the DCI or the RAR may be skipped, and the processor 102 may transmit the UL channel through the transceiver, based on whether to perform LBT as indicated by the SIB.

After the SIB is received, the processor 102 may receive a parameter csi-RS-ValidationWith-DCI through the transceiver 106. However, the reception of the parameter csi-RS-ValidationWith-DCI based on the received SIB may be skipped. The processor 102 may receive a periodic/semi-persistent CSI-RS through the transceiver 106, based on the received SIB. A detailed process of the operation of the processor 102 described above may be based on [Method #4].

In another example, the processor 102 may perform LBT based on a sensing beam. Further, when the LBT is successful, the processor 102 may transmit a CG-PUSCH and CG-UCI through the transceiver 106 (S1403). The CG-UCI may include information about whether the processor 102 has performed LBT through a sensing beam indicated by a BS or another sensing beam. The processor 102 may receive a DL channel from the BS through the transceiver 106.

A specific operation process of the processor 102 corresponding to the above-described example may be based on [Method #6].

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the disclosure, the wireless device may be a communication modem/circuit/chip.

Specifically, instructions and/or operations, controlled by the processor 202 of the second wireless device 100 and stored in the memory 204 of the second wireless device 200, according to an Embodiment of the disclosure will be described.

Although the following operations will be described based on a control operation of the processor 202 in terms of the processor 202, software code for performing such an operation may be stored in the memory 204. For example, in the disclosure, the at least one memory 204 may be a computer-readable storage medium and may store instructions or programs. The instructions or programs may cause, when executed, the at least one processor operably connected to the at least one memory to perform operations according to Embodiments or implementations of the disclosure, related to the following operations.

For example, the processor 202 may transmit a SIB through the transceiver 206 to indicate whether the UE should perform LBT when transmitting a UL channel. Further, the processor 202 may transmit DCI or an RAR, which schedules the UL channel (e.g., PUSCH/PUCCH), through the transceiver 206. The processor 202 may receive the UL channel (e.g., PUSCH/PUCCH) based on the SIB and the DCI or RAR through the transceiver 206. A specific method of performing the above-described example may be based on at least one of [Method #1], [Method #2], [Method #3], or [Method #5]. For example, when the specific method is based on at least one of [Method #1], [Method #2], or [Method #3], the UL channel may be a DG-PUSCH, an Msg 3. PUSCH, or an Msg A. PUSCH. Further, when the specific method is based on [Method 5], the DCI or RAR transmission step may be skipped, and the processor 202 may receive the UL channel through the transceiver 206 based on whether LBT is to be performed.

After the SIB transmission step, the processor 202 may transmit a parameter csi-RS-ValidationWith-DCI through the transceiver 206. However, the transmission of the parameter csi-RS-ValidationWith-DCI based on the transmitted SIB may be skipped. The processor 202 may transmit a periodic/semi-persistent CSI-RS based on the transmitted SIB through the transceiver 206. A detailed operation process corresponding to the above-described example may be based on [Method #4].

In another example, the processor 202 may receive a CG-PUSCH and CG-UCI through the transceiver 206. The processor 202 may determine whether to allow sharing of a COT acquired by the UE, based on information included in the CG-UCI (i.e., information about whether the UE has performed LBT through a sensing beam indicated by the processor 202 or another sensing beam).

The processor 202 may transmit a DL channel through the transceiver 206 by performing LBT based on the determination as to whether to allow COT sharing.

A specific operation process of the BS corresponding to the above-described example may be based on [Method #6].

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

FIG. 19 illustrates a vehicle or an autonomous driving vehicle applied to the disclosure. The vehicle or autonomous driving vehicle may be implemented as a mobile robot, a car, a train, a manned/unmanned aerial vehicle (AV), a ship, or the like.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The Embodiments of the disclosure described herein below are combinations of elements and features of the disclosure. The elements or features may be considered selective unless otherwise mentioned. Each element or feature may be practiced without being combined with other elements or features. Further, an Embodiment of the disclosure may be constructed by combining parts of the elements and/or features. Operation orders described in Embodiments of the disclosure may be rearranged. Some constructions of any one Embodiment may be included in another Embodiment and may be replaced with corresponding constructions of another Embodiment. It will be obvious to those skilled in the art that claims that are not explicitly cited in each other in the appended claims may be presented in combination as an Embodiment of the disclosure or included as a new claim by a subsequent amendment after the application is filed.

In the disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

Those skilled in the art will appreciate that the disclosure may be carried out in other specific ways than those set forth herein without departing from the spirit and essential characteristics of the disclosure. The above Embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

Industrial Applicability

While the above-described method and apparatus for transmitting and receiving a UL signal and/or a DL signal has been described with reference to an example in which they are applied to a 5G NewRAT system, they are also applicable to various wireless communication systems other than the 5G NewRAT system.

**Claims**

1.    A method of transmitting a physical uplink shared channel (PUSCH) in a band of 52.6GHz or higher by a user equipment (UE) in a wireless communication system, the method comprising:

   receiving a system information block (SIB);
   receiving a random access response (RAR) uplink (UL) grant for scheduling the PUSCH; and
   transmitting the PUSCH based on the RAR UL grant,
   wherein based on the SIB including a parameter indicating that a channel access procedure (CAP) is to be applied, the number of bits in a field for indicating a channel access type included in the RAR UL grant is 2, and
   wherein based on the SIB not including the parameter, the number of bits in the field for indicating a channel access type included in the RAR UL grant is 0.

2.    The method of claim 1, wherein based on the SIB not including the parameter, the RAR UL grant includes the same fields as included in an RAR UL grant for a spectrum other than a shared spectrum.

3.    The method of claim 1, wherein based on the SIB not including the parameter, the RAR UL grant does not include the field for indicating a channel access type.

4.    The method of claim 1, wherein a sum of the number of bits in the field for indicating a channel access type and the number of bits in a field for frequency resource allocation of the PUSCH, based on the SIB including the parameter is equal to a sum of the number of bits in the field for indicating a channel access type and the number of bits in the field for frequency resource allocation of the PUSCH, based on the SIB not including the parameter.

5. The method of claim 1, wherein regardless of whether the SIB includes the parameter, a sum of the number of bits in the field for indicating a channel access type and the number of bits in a field for frequency resource allocation of the PUSCH is a fixed value of 14.

6. The method of claim 1, wherein based on the SIB including the parameter, the PUSCH is transmitted after application of a CAP based on the field for indicating a channel access type, and
wherein based on the SIB not including the parameter, the PUSCH is transmitted without a CAP.

7. A user equipment (UE) for transmitting a physical uplink shared channel (PUSCH) in a band of 52.6GHz or higher in a wireless communication system, the UE comprising:

at least one transceiver;
at least one processor; and
at least one memory operably coupled to the at least one processor, and storing instructions which when executed, cause the at least one processor to perform operations,
wherein the operations include:

receiving a system information block (SIB) through the at least one transceiver;
receiving a random access response (RAR) uplink (UL) grant for scheduling the PUSCH through the at least one transceiver; and
transmitting the PUSCH based on the RAR UL grant through the at least one transceiver,
wherein based on the SIB including a parameter indicating that a channel access procedure (CAP) is to be applied, the number of bits in a field for indicating a channel access type included in the RAR UL grant is 2, and
wherein based on the SIB not including the parameter, the number of bits in the field for indicating a channel access type included in the RAR UL grant is 0.

8. The UE of claim 7, wherein based on the SIB not including the parameter, the RAR UL grant includes the same fields as included in an RAR UL grant for a spectrum other than a shared spectrum.

9. The UE of claim 7, wherein based on the SIB not including the parameter, the RAR UL grant does not include the field for indicating a channel access type.

10. The UE of claim 7, wherein a sum of the number of bits in the field for indicating a channel access type and the number of bits in a field for frequency resource allocation of the PUSCH, based on the SIB including the parameter is equal to a sum of the number of bits in the field for indicating a channel access type and the number of bits in the field for frequency resource allocation of the PUSCH, based on the SIB not including the parameter.

11. The UE of claim 7, wherein regardless of whether the SIB includes the parameter, a sum of the number of bits in the field for indicating a channel access type and the number of bits in a field for frequency resource allocation of the PUSCH is a fixed value of 14.

12. The UE of claim 7, wherein based on the SIB including the parameter, the PUSCH is transmitted after application of a CAP based on the field for indicating a channel access type, and
wherein based on the SIB not including the parameter, the PUSCH is transmitted without a CAP.

13. A method of receiving a physical uplink shared channel (PUSCH) in a band of 52.6GHz or higher by a base station (BS) in a wireless communication system, the method comprising:

transmitting a system information block (SIB);
transmitting a random access response (RAR) uplink (UL) grant for scheduling the PUSCH; and
receiving the PUSCH based on the RAR UL grant,
wherein based on the SIB including a parameter indicating that a channel access procedure (CAP) is to be applied, the number of bits in a field for indicating a channel access type included in the RAR UL grant is 2, and
wherein based on the SIB not including the parameter, the number of bits in the field for indicating a channel access type included in the RAR UL grant is 0.

14. A base station (BS) for receiving a physical uplink shared channel (PUSCH) in a band of 52.6GHz or higher in a wireless communication system, the BS comprising:

at least one transceiver;

at least one processor; and

at least one memory operably coupled to the at least one processor, and storing instructions which when executed, cause the at least one processor to perform operations,

wherein the operations include:

transmitting a system information block (SIB) through the at least one transceiver;

transmitting a random access response (RAR) uplink (UL) grant for scheduling the PUSCH through the at least one transceiver; and

receiving the PUSCH based on the RAR UL grant through the at least one transceiver,

wherein based on the SIB including a parameter indicating that a channel access procedure (CAP) is to be applied, the number of bits in a field for indicating a channel access type included in the RAR UL grant is 2, and

wherein based on the SIB not including the parameter, the number of bits in the field for indicating a channel access type included in the RAR UL grant is 0.

15. An apparatus for transmitting a physical uplink shared channel (PUSCH) in a band of 52.6GHz or higher in a wireless communication system, the apparatus comprising:

at least one processor; and

at least one memory operably coupled to the at least one processor, and storing instructions which when executed, cause the at least one processor to perform operations,

wherein the operations include:

receiving a system information block (SIB);

receiving a random access response (RAR) uplink (UL) grant for scheduling the PUSCH; and

transmitting the PUSCH based on the RAR UL grant,

wherein based on the SIB including a parameter indicating that a channel access procedure (CAP) is to be applied, the number of bits in a field for indicating a channel access type included in the RAR UL grant is 2, and

wherein based on the SIB not including the parameter, the number of bits in the field for indicating a channel access type included in the RAR UL grant is 0.

16. A computer-readable storage medium including at least one computer program causing at least one processor to perform operations,

wherein the operations include:

receiving a system information block (SIB);

receiving a random access response (RAR) uplink (UL) grant for scheduling the PUSCH; and

transmitting the PUSCH based on the RAR UL grant,

wherein based on the SIB including a parameter indicating that a channel access procedure (CAP) is to be applied, the number of bits in a field for indicating a channel access type included in the RAR UL grant is 2, and

wherein based on the SIB not including the parameter, the number of bits in the field for indicating a channel access type included in the RAR UL grant is 0.

【FIG. 1】

BS

PCC (Licensed band)

SCC (Unlicensed band)

UE

(a) Carrier aggregation between L-band and U-band

BS

PCC (Unlicensed band)

SCC (Unlicensed band)

UE

(b) Standalone U-band(s)

【FIG. 2】

【FIG. 3】

【FIG. 4】

frequncy

BWP

| LBT-SB#(K-1)<br>(e.g., 20MHz) |
| --- |
| . . . |
| LBT-SB#1<br>(e.g., 20MHz) |
| LBT-SB#0<br>(e.g., 20MHz) |

【FIG. 5】

( a )

( b )

【FIG. 6】

UE · · · · · BS

601 · MsgA : PRACH preamble + data
Msg1 + Msg3

603 · MsgB : random access response
Msg2 + Msg4

【FIG. 7】

【FIG. 8】

(a) Uplink Tx procedure based on dynamic grant      (b) Uplink Tx procedure based on configured grant

【FIG. 9】

(a)

(b)

【FIG. 10】

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

【FIG. 11】

receive SIB for indicating whether UE is to perform LBT —— S1101

receive DCI/RAR scheduling UL channel —— S1103

transmit UL channel based on (i) SIB and/or (ii) DCI/RAR —— S1105

receive parameter csi-RS-ValidationWith-DCI —— S1107

receive periodic/semi-persistent CSI-RS —— S1109

【FIG. 12】

```
           ┌─────────────────────────────┐
           │ transmit SIB for indicating whether │──── S1201
           │ UE is to perform LBT              │
           └─────────────────────────────┘
                        │
          ┌─────────────┴─────────────┐
          ▼                           ▼
┌ ─ ─ ─ ─ ─ ─ ─ ─ ─ ─ ┐    ┌ ─ ─ ─ ─ ─ ─ ─ ─ ─ ─ ─ ┐
│ transmit DCI/RAR scheduling UL │─ S1203   │ transmit parameter csi-RS-   │─ S1207
│ channel                        │          │ ValidationWith-DCI          │
└ ─ ─ ─ ─ ─ ─ ─ ─ ─ ─ ┘    └ ─ ─ ─ ─ ─ ─ ─ ─ ─ ─ ─ ┘
          │                           │
          ▼                           ▼
┌─────────────────────────┐    ┌─────────────────────────┐
│ receive UL channel based on (i) │─ S1205   │ transmit periodic/semi-persistent │─ S1209
│ SIB and/or (ii) DCI/RAR         │          │ CSI-RS                          │
└─────────────────────────┘    └─────────────────────────┘
```

【FIG. 13】

```
    ┌──────┐                                          ┌──────┐
    │  UE  │                                          │  BS  │
    └──────┘                                          └──────┘
       │                                                 │
       │      transmit SIB for indicating whether UE is to perform LBT
 S1301 │◄─────────────────────────────────────────────────
       │                                                 │
       │      transmit DCI/RAR scheduling UL channel
 S1303 │◄ ─ ─ ─ ─ ─ ─ ─ ─ ─ ─ ─ ─ ─ ─ ─ ─ ─ ─ ─ ─ ─ ─ ─
       │      transmit UL channel based on (i) SIB and/or (ii) DCI/RAR
 S1305 │─────────────────────────────────────────────────►
       │                                                 │
       │      transmit parameter csi-Rs-ValidationWith-DCI
 S1307 │◄ ─ ─ ─ ─ ─ ─ ─ ─ ─ ─ ─ ─ ─ ─ ─ ─ ─ ─ ─ ─ ─ ─ ─
       │      transmit periodic/semi-persistent CSI-RS
 S1309 │◄─────────────────────────────────────────────────
       │                                                 │
```

【FIG. 14】

| perform LBT based on sensing beam | S1401 |

↓

| transmit CG-PUSCH and CG-UCI | S1403 |

↓

| receive DL channel | S1405 |

【FIG. 15】

| receive CG-PUSCH and CG-UCI | S1501 |

↓

| determine whether to allow COT sharing based on CG-UCI | S1503 |

↓

| perform LBT based on whether to allow COT sharing | S1505 |

↓

| transmit DL channel | S1507 |

【FIG. 16】

【FIG. 17】

【FIG. 18】

【FIG. 19】

## INTERNATIONAL SEARCH REPORT

| International application No. |
| --- |
| **PCT/KR2022/021572** |

| A. | CLASSIFICATION OF SUBJECT MATTER |
| --- | --- |

**H04W 74/08**(2009.01)i; **H04W 74/00**(2009.01)i; **H04W 72/23**(2023.01)i

According to International Patent Classification (IPC) or to both national classification and IPC

| B. | FIELDS SEARCHED |
| --- | --- |

Minimum documentation searched (classification system followed by classification symbols)

H04W 74/08(2009.01); H04L 5/00(2006.01); H04W 72/02(2009.01); H04W 72/04(2009.01); H04W 72/12(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RAR UL 그랜트(random access response uplink grant), PUSCH(physical uplink shared channel), CAP(channel access procedure), 타입(type), 공유 스펙트럼(shared spectrum)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y<br>A | Technical Specification Group Radio Access Network; NR; Physical layer procedures for control(Release 16). 3rd GENERATION PARTNERSHIP PROJECT. TS 38.213 V16.8.0. 05 January 2022.<br>  See sections 8.2-8.3 and 12; and table 8.2-1. | 1-3,7-9,13-16<br>4-6,10-12 |
| Y | WO 2021-230728 A1 (LG ELECTRONICS INC.) 18 November 2021 (2021-11-18)<br>  See paragraph [0163]; claim 1; and figure 12. | 1-3,7-9,13-16 |
| A | US 2021-0212130 A1 (LENOVO (SINGAPORE) PTE. LTD.) 08 July 2021 (2021-07-08)<br>  See paragraphs [0094]-[0099]; claim 1; and figure 5. | 1-16 |
| A | US 2019-0261407 A1 (TELEFONAKTIEBOLAGET LM ERICSSON (PUBL)) 22 August 2019 (2019-08-22)<br>  See paragraphs [0048]-[0053]; claim 1; and figure 3. | 1-16 |
| A | US 2021-0195657 A1 (NOKIA TECHNOLOGIES OY) 24 June 2021 (2021-06-24)<br>  See paragraphs [0079]-[0091]; claim 41; and figure 2. | 1-16 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 April 2023** | **07 April 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/021572**

| Patent document cited in search report | | | Publication date (day/month/year) | Patent family member(s) | | | Publication date (day/month/year) |
|---|---|---|---|---|---|---|---|
| WO | 2021-230728 | A1 | 18 November 2021 | CN | 115462142 | A | 09 December 2022 |
| | | | | EP | 4117360 | A1 | 11 January 2023 |
| | | | | KR | 10-2022-0133922 | A | 05 October 2022 |
| | | | | US | 2023-0027824 | A1 | 26 January 2023 |
| US | 2021-0212130 | A1 | 08 July 2021 | CN | 112075046 | A | 11 December 2020 |
| | | | | EP | 3788738 | A2 | 10 March 2021 |
| | | | | US | 10952255 | B2 | 16 March 2021 |
| | | | | US | 2019-0342921 | A1 | 07 November 2019 |
| | | | | WO | 2019-211667 | A2 | 07 November 2019 |
| | | | | WO | 2019-211667 | A3 | 19 December 2019 |
| US | 2019-0261407 | A1 | 22 August 2019 | AU | 2019-230956 | A1 | 23 July 2020 |
| | | | | BR | 112020014512 | A2 | 08 December 2020 |
| | | | | CN | 111699745 | A | 22 September 2020 |
| | | | | EP | 3753356 | A1 | 23 December 2020 |
| | | | | JP | 2021-520662 | A | 19 August 2021 |
| | | | | JP | 7044886 | B2 | 30 March 2022 |
| | | | | KR | 10-2020-0109354 | A | 22 September 2020 |
| | | | | KR | 10-2381191 | B1 | 01 April 2022 |
| | | | | US | 11140707 | B2 | 05 October 2021 |
| | | | | US | 2021-0385856 | A1 | 09 December 2021 |
| | | | | WO | 2019-170390 | A1 | 12 September 2019 |
| US | 2021-0195657 | A1 | 24 June 2021 | CN | 112586044 | A | 30 March 2021 |
| | | | | EP | 3811693 | A1 | 28 April 2021 |
| | | | | EP | 3811693 | A4 | 19 January 2022 |
| | | | | JP | 2021-528021 | A | 14 October 2021 |
| | | | | KR | 10-2021-0022697 | A | 03 March 2021 |
| | | | | WO | 2019-241978 | A1 | 26 December 2019 |

Form PCT/ISA/210 (patent family annex) (July 2022)